# EUROPÄISCHE PATENTSCHRIFT

(11) **EP 1 720 764 B1**
(45) Veröffentlichungstag und Bekanntmachung des Hinweises auf die Patenterteilung: **01.10.2008**
(21) Anmeldenummer: 05715284.5
(22) Anmeldetag: 10.02.2005
(51) Int. Cl.: B64C 1/20, B64D 9/00, B60P 7/08, B60P 7/13

(54) **FRACHTRAUMBODEN FÜR LUFTFAHRZEUGE**
CARGO-HOLD FLOOR FOR AIRCRAFT
PLANCHER DE LA SOUTE D'AVIONS

(30) Priorität: 11.02.2004 DE 102004006648
(43) Veröffentlichungstag der Anmeldung: 15.11.2006
(73) Patentinhaber: PFW Aerospace AG, 67346 Speyer (DE)
(72) Erfinder: OETKEN, Axel, 27777 Ganderkesee (DE); EITZENBERGER, Berthold, 67059 Ludwigshafen (DE)
(74) Vertreter: Hörschler, Wolfram Johannes
(86) Internationale Anmeldenummer: PCT/EP2005/001324
(87) Internationale Veröffentlichungsnummer: WO 2005/077755

(56) Entgegenhaltungen:
- EP-A- 0 816 224
- DE-B- 1 122 379
- US-A- 4 077 590

## Beschreibung

Die Erfindung bezieht sich auf einen Frachtraumboden für Luftfahrzeuge, der Vorrichtungen zum Transport und zur Arretierung von Gegenständen aufweist und insbesondere einfach und schnell für verschiedene Anwendungsfälle umrüstbar ist.

Aus DE 2 162 042 ist eine Be- und Entladevorrichtung für Flugzeuge bekannt. Diese weist eine Steuereinrichtung zum Betreiben einer Kraftantriebsanlage auf sowie eine Rückhalteanordnung, wobei die Kraftantriebsanlage eine Anzahl von wahlweise in Betrieb zu setzenden Kraft betriebenen Einheiten aufweist. Diese sind im Laderaum des Flugzeuges an verschiedenen Stellen angeordnet. Die Rückhalteanordnung weist wahlweise zu steuernde Führungs- und Rückhaltemittel auf, die ebenfalls an verschiedenen Stellen im Laderaum des Flugzeugs angeordnet sind und durch Schaltmittel in einer Steuereinrichtung gesteuert werden, so dass Antriebseinheiten wahlweise betreibbar sind, die mit Führungs- und Zurückhaltungsmitteln in koordinierter Weise zusammenwirken, so dass ein Frachtgegenstand, wie etwa eine Palette oder ein Container, im Laderaum des Flugzeuges bewegt werden kann und an einer bestimmten Stelle positionierbar ist.

Aus DE 29 08 400 A1 ist ein Frachtladesystem für Großraumflugzeuge bekannt geworden. Das Frachtladesystem wird in Unterflurfrachträumen von Großraumflugzeugen, die mit Containern und Paletten beladen werden, eingebaut. Das Frachtladesystem umfasst eingebaute Rollenbahnen, Kugelmatten, Trag- und Bremsrollen sowie diesen jeweils zugeordnete Antriebe. Das manuell bedienbare Frachtladesystem lässt sich durch wahlweise Zuordnung elektrischer und elektronischer Bauteile für halb- oder vollautomatischen Betrieb umrüsten, wobei bei der Umrüstung die mechanischen Riegelkomponenten konstruktionsmäßig und funktionell unverändert bleiben. Den mechanischen Riegelelementen sind die elektrischen Bauteile einsetzbar zugeordnet und die mechanischen Riegelelemente sind derart ausgestattet, dass diese per Fuß bedienbar sind.

Aus US 3,262,588 sind eine Frachtladevorrichtung und ein Rückhaltesystem bekannt, welches im Frachtladebereich eines Flugzeugs eingesetzt wird. Die Frachtladesystem umfasst einen die Fracht abstützenden Boden sowie einen Eingang, durch welche die Frachtgegenstände ein- und ausladbar sind. Eine Anzahl von Rollenbahnen erstreckt sich in Längsrichtung im Boden des Frachtraumes, wobei jede der Rollenbahnen Befestigungsvorrichtungen aufweist, die in Längsrichtung voneinander beabstandet angeordnet sind. Es sind eine Vielzahl von Förderrollen in den Rollenbahnen aufgenommen, so dass ein im Wesentlichen kontinuierlicher Transport eines jeden Frachtgegenstandes zu einer Transportposition erfolgen kann. Ferner ist eine Vielzahl von bewegbaren Verriegelungselementen aufgenommen, welche von ihrer deaktivierten Position unterhalb einer Transportebene der Rollenbahnen in eine aktivierte Position überführbar sind, so dass jeder Frachtgegenstand gegen eine Längsbewegung und eine vertikale Bewegung auf den Rollenbahnen gesichert werden kann. Die Verriegelungselemente sind in gegenläufiger Ausrichtung an den Rollenbahnen aufgenommen.

Aus EP 0 964 489 A2 ist ein Bodenelement für das Ladedeck eines Flugzeugs bekannt, welches der Aufnahme und dem Verschieben von Frachtgegenständen dient. Das Bodenelement besteht im Wesentlichen aus einem Hohlprofil mit einer durchgehenden Deckfläche und einer dazu parallel angeordneten Bodenfläche. Die Deckfläche und die Bodenfläche sind durch mehrere in Längsrichtung des Bodenelementes verlaufende Profilstege voneinander beabstandet. Die Deckfläche weist zur Aufnahme von Kugelelementen eine Anzahl von Aufnahmeöffnungen auf.

Aus US 4,077,590, welches den nächstliegenden Stand der Technik darstellt, ist ein Frachtraumboden für Flugzeuge bekannt.

An Frachtladesysteme für Flugzeuge, die im militärischen Bereich eingesetzt werden, wird die Anforderung gestellt, dass der Frachtraumboden glatt und geschlossen ausgestaltet ist, so dass dessen Begehen und Befahren möglich ist. Ferner darf die Oberfläche des Frachtraumbodens keine Stolperstellen aufweisen, des Weiteren sollte der Frachtraum im Bodenbereich eines für militärische Zwecke nutzbaren Luftfahrzeuges schnell umrüstbar sein und neben militärischen Einsatzzwecken auch für zivile Zwecke verwendbar sein.

Der Erfindung liegt die Aufgabe zugrunde, einen Frachtraumboden für Luftfahrzeuge bereitzustellen, welcher einerseits sowohl für militärische als auch für zivile Zwecke nutzbar ist und der andererseits Stauraum für nicht benötigte Frachtladekomponenten bereitstellt, ohne das Frachtraumvolumen zu beeinträchtigen.

Erfindungsgemäß wird diese Aufgabe durch die Merkmale des Patentanspruches 1 gelöst.

In vorteilhafter Weise ist der Frachtraumboden modular aufgebaut und von einem den Flugzeugrumpf durchziehenden, fachwerkartig ausgebildeten Strukturraster abgestützt. Das Strukturraster umfasst im wesentlichen Längsträger und Querträger, die eine Oberkante gleicher Höhe aufweisen. Erfindungsgemäß ist der Frachtraumboden derart aufgebaut, dass dieser als Stauraum für alle im Moment nicht benötigten militärischen oder zivilen Frachtladekomponenten dient und sich diese momentan nicht benötigten Frachtladekomponenten jederzeit auch an der für ihre spätere Funktion vorgesehenen Position im Frachtraumboden an Bord befinden. Daher wird kein zusätzlicher, das Frachtraumvolumen beeinträchtigender Stauraum für demontierte Frachtladekomponenten benötigt. Es entfällt ferner das Erfordernis, sperrige und im momentanen Einsatzfall nicht genutzte Frachtladekomponenten am Heimatstützpunkt des Luftfahrzeuges zurücklassen zu müssen, um einerseits Gewicht einzusparen und andererseits das Frachtraumvolumen nicht zu begrenzen.

Die erfindungsgemäß vorgeschlagene Konfiguration des Frachtraumbodens bietet darüber hinaus den Vorteil, dass eine Fehlfunktion eines Frachtladesystems aufgrund falscher Positionierung der Frachtladekomponenten ausgeschlossen werden kann.

Der erfindungsgemäß vorgeschlagene Frachtraumboden ist so aufgebaut, dass beim Transport und der Arretierung sowohl militärischer als auch ziviler Gegenstände, wie beispielsweise Paletten und Container oder Militärfahrzeuge, Truppen und Versorgungsgegenstände andererseits eine Systemhöhe von nur wenigen cm oberhalb der Frachtraumbodenfläche erreicht wird. Unter Systemhöhe wird nachfolgend der Abstand zwischen der Frachtraumbodenfläche und der Mantelfläche von in ein Rollenbahngerät eingelassenen Transportrollen, um ein Beispiel zu nennen, verstanden. Die durch die erfindungsgemäße Lösung geschaffene reduzierte Systemhöhe bietet sowohl im militärisch als auch zivil genutzten Systemen einerseits eine Gewichtsreduzierung des gesamten Frachtraumbodens sowie andererseits eine Erhöhung des effektiven Frachtraumvolumens und eine Vergrößerung der maximal zulässigen Fracht- bzw. Containerhöhe für militärische und zivile Zwecke. Die Dichtheit des Frachtraumbodens gegen von Fahrzeugen oder Containern abtropfendes Kondenswasser oder gegen Feuchtigkeit im allgemeinen ist dadurch gewährleistet, dass Fußbodenplatten mit einer in ein Sitzschienenkastenprofil integrierten Dichtung auf Auflageleisten von Zurrpunkt-Gehäusen und Auflageleisten von Unterbaugehäusen von Rollenbahngeräten sowie auf den Oberkanten des Strukturrasters des Flugzeugrumpfes aufliegen. Die Auflageflächen für die Fußbodenplatten sind versatzfrei zwischen der Oberkante des Strukturrasters, den Auflageleisten von Zurrpunkten und den Auflageleisten von Unterbaugehäusen von Rollenbahngeräten ausgebildet. Dies bewirkt eine gleichmäßig und ununterbrochen aufliegende Dichtfläche der Fußbodenplatten. Durch die Ausgestaltung der Fußbodenplatten als schnell demontierbare Komponenten ist die Zugänglichkeit des Raumes unterhalb des Frachtraumbodens, d.h. die Zugänglichkeit zu innerhalb des Strukturrasters verlegten Versorgungsleitungen gewährleistet, ohne die Dichtigkeit des Frachtraumbodens zu beeinträchtigen.

Der Frachtraumboden weist im wesentlichen fest mit dem Strukturraster verbundenen Zurrpunkte, auf dem Strukturraster aufliegende Fußbodenplatten sowie Rollenbahngeräte und Verriegelungsträger auf.

Die Zurrpunkte können einerseits mit einer omnidirektional bewegbaren Öse für leichtere Frachtgegenstände und andererseits auch mit einer Öse zur Fixierung schwererer Lasten versehen werden. Die Ösen lassen sich durch einfaches Ziehen einer Steckverbindung auswechseln. Die Zurrpunkte sind an ihrer Oberfläche mit einem trittfesten Füllkörper versehen, so dass im Frachtraumboden keine Stolperstellen entstehen. Aufgrund der omnidirektionalen Bewegbarkeit sowohl der leichten als auch der schweren Öse ist eine flexible Befestigung von Gegenständen beispielsweise über Gurte möglich. Zur Fixierung schwererer Frachtladegegenstände, können in die Zurrpunkte leichte oder auch schwerere Zusatzadapter abgesteckt werden, die ebenfalls omnidirektional bewegt werden können und die an die entsprechende Fracht angepasste, optimierte Befestigungsmöglichkeiten bieten. Daneben können mit dem Strukturraster verbindbare Rollenbahngeräte eingesetzt werden, die im Einsatzzustand mit ihren Frachtgegenstände abstützenden Rollen über den Frachtraumboden erhaben hervorstehend montiert sind. Werden diese hingegen nicht benötigt, werden diese mittels einer einfach bedienbare Befestigungseinheit gelöst, verdreht und in umgedrehter Weise wieder in ihre Position (Stauposition) eingelassen, so dass eine glatte Frachtraumbodenoberfläche entsteht.

Darüber hinaus können in Fußbodenplatten Riegelträger eingebaut werden, welche ebenfalls so ausgebildet sind, dass diese im nicht aktivierten Zustand in ihre Unterbauwanne eingebaut werden und die Unterseite der Verriegelungsträger plan zur Oberfläche der Fußbodenplatte verläuft.

Die Rollenbahngeräte sind in einer Länge ausgebildet, die vorzugsweise dem Abstand zwischen zwei auf einem Kreuzungspunkt des Strukturrasters befestigten Zurrpunkten entspricht. Die in die Fußbodenplatten integrierten Verriegelungsträger sind vorzugsweise mit einer Hand bedienbar, wobei auch in den Verriegelungsträgern eine Befestigungseinheit vorgesehen werden kann, welche einen zurückziehbaren Bolzen umfasst, so dass der Verriegelungsträger von seiner aktiven Position in seine Stauposition und umgekehrt, einfach überführbar ist.

In vorteilhafter Weise weisen die auf dem Strukturraster plan aufliegenden Fußbodenplatten ein beispielsweise umlaufend ausgebildetes Sitzschienenkastenprofil auf. In dieses Sitzschienenkastenprofil können bei Umrüstung des Frachtraumbodens von militärischen Zwecken auf zivile Zwecke Sitze arretiert werden, ohne dass weitere Befestigungselemente benötigt werden. Werden Sitze in das Sitzschienenprofil eingelassen, so wird ein in der Fußbodenplatte mittig aufgenommener Verriegelungsträger von seiner aufgerichteten Betriebsposition in seine abgesenkte Überfahrposition gebracht und bildet in dieser Stauposition mit der Oberseite der Fußbodenplatte eine plane Fläche.

Zur Fixierung besonders schwerer Lasten, können vier auf den Kreuzungspunkten von Längsträgern und Querstreben des Strukturrasters aufgenommene Zurrpunkte durch eine Verbindungsplatte überdeckt werden, so dass an jedem Zurrpunkt ein Viertel der Last, welche die Verbindungsplatte aufnimmt, in das Strukturraster eingeleitet wird. Mit Hilfe der beispielsweise vier Zurrpunkte miteinander verbindenden Verbindungsplatte lassen sich besonders schwere Gegenstände, wie beispielsweise Militär-Lkw auf dem Frachtraumboden befestigen.

### Zeichnung

Anhand der Zeichnung wird die Erfindung nachstehend eingehender beschrieben.

Es zeigt:
- Figur 1.1: einen Zurrpunkt auf einem Strukturraster in Seitenansicht,
- Figur 1.2: den Zurrpunkt gemäß Figur 1.1 in der Draufsicht,
- Figur 1.3: den Zurrpunkt gemäß Figur 1 in einer um 90° gedrehten Seitenansicht,
- Figur 1.4: eine leichte, auswechselbare Befestigungsöse für den Zurrpunkt,
- Figur 1.5: eine schwere auswechselbare Befestigungsöse mit Gurtstück für den Zurrpunkt,
- Figur 2.1: einem am Zurrpunkt gelenkig gelagerten leichten Zusatzadapter,
- Figur 2.2: die Draufsicht auf den Zurrpunkt gemäß Figur 2.1,
- Figur 2.3: eine Seitenansicht des Zurrpunktes gemäß Figur 2.1,
- Figur 2.4: eine Darstellung des Zusatzadapters,
- Figur 3.1: ein Rollenbahngerät,
- Figur 3.2: die Draufsicht auf das Rollenbahngerät gemäß Figur 3.1,
- Figur 3.3: das am Strukturraster befestigte, aufgestellte Rollenbahngerät,
- Figur 3.4: das in die Frachtraumbodenfläche versenkte, mit dieser fluchtende Rollenbahngerät,
- Figur 4.1: aufgestellte Rollenbahngeräte und Verriegelungseinheiten mit Fußbodenplatte,
- Figur 4.2: mit der Fußbodenplatte fluchtende Rollenbahngeräte und Verriegelungselemente in Stauposition,
- Figur 5.1: eine Seitenansicht von Zurrpunkt und Rollenbahngeräten an einem Strukturraster,
- Figur 5.2: die Draufsicht auf das Strukturraster gemäß Figur 5.1,
- Figur 5.3: ein am Strukturraster befestigtes Unterbaugehäuse eines Rollenbahngerätes,
- Figur 5.4: die Ansicht eines Zurrpunktes mit Zusatzadapter,
- Figur 6.1: eine Fußbodenplatte mit versenkter Verriegelungseinheit in Seitenansicht,
- Figur 6.2: eine Fußbodenplatte mit aufgestellter Verriegelungseinheit in Seitenansicht,
- Figur 6.3: die Draufsicht auf eine Fußbodenplatte mit Verriegelungseinheit,
- Figur 7.1: die Seitenansicht einer Fußbodenplatte mit Zurrpunkten, aufgestellten und versenkten Rollenbahngeräten,
- Figur 7.2: die Draufsicht auf die Fußbodenplatte gemäß Figur 7.1 mit Strukturraster,
- Figur 8: eine mehrere Zurrpunkte übergreifende Verbindungsplatte zur Befestigung schwerster Lasten im Frachtladeraum eines Luftfahrzeuges,
- Figuren 9.1 bis 9.6: eine Ausführungsvariante eines elektromotorisch betreibbaren, für militärische Zwecke nutzbaren Verriegelungssystems, wobei der elektrisch betätigte Riegel in mehreren Stellpositionen dargestellt ist,
- Figur 10.1: eine Vorderansicht mehrerer parallel zu den Längsträgern des Strukturrasters aufgenommener Verriegelungsmodule und
- Figur 10.2: eine Draufsicht auf an der Oberseite eines Strukturrasters befestigter für militärische Zwecke nutzbarer elektromotorisch betriebener Verriegelungseinheiten.

### Ausführungsvarianten

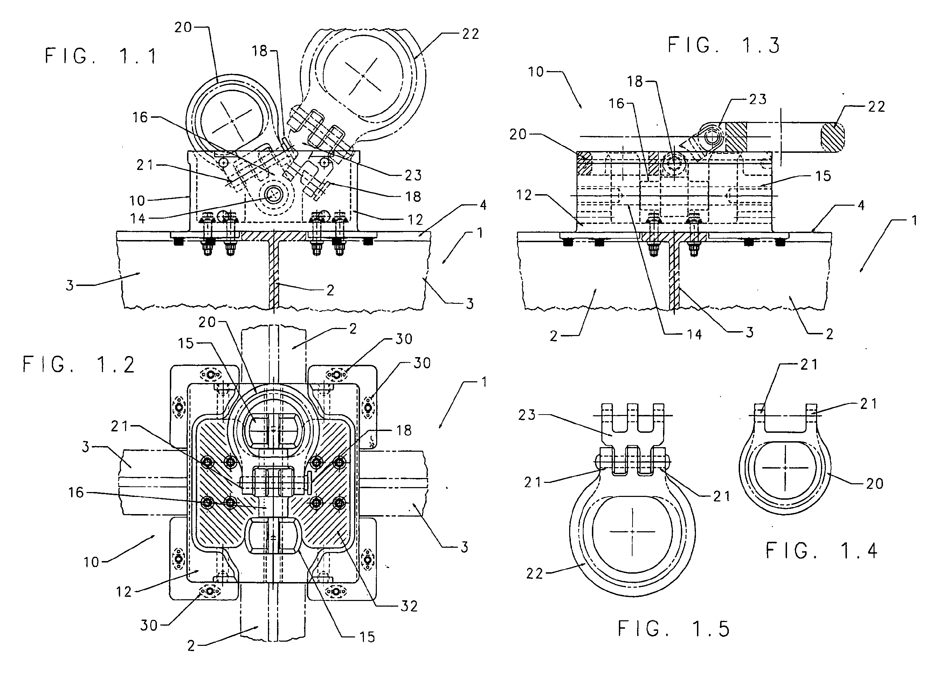

Figur 1.1 ist ein Zurrpunkt zu entnehmen, der auf einem Strukturraster befestigt ist.

Ein Strukturraster 1 umfasst Längsträger 2 und Querträger 3 und ist fachwerkartig aufgebaut. Das Strukturraster 1 befindet sich innerhalb eines Flugzeugrumpfes und bildet die Unterbaukonstruktion für einen Frachtladeraumboden. Die Oberkante des Strukturrasters 1 ist durch Bezugszeichen 4 kenntlich gemacht. Am Strukturraster 1 ist ein Zurrpunkt 10 befestigt, welches als zentrale Kraftübertragungseinheit dient. Der Zurrpunkt 1.0 umfasst ein Zurrpunktgehäuse 12, in welchem eine beidseitig gelagerte, horizontal verlaufende Zurrpunktachse 14 aufgenommen ist. An der Zurrpunktachse 14 ist eine Aufnahme 16 gelagert. Die Achsenlager für die Zurrpunktachse 14 im Zurrpunktgehäuse 12 sind durch Bezugszeichen 15 angedeutet. Die Aufnahme 16 umfasst eine doppelte Augenlasche, in welcher in der Darstellung gemäß Figur 1.1 eine leichte Öse 20 aufgenommen ist. Mittels eines Steckverbinders 18 ist die leichte Öse 20 für niedrige Belastung mit der doppelten Augenlasche der Aufnahme 16 verbunden. Die doppelte Augenlasche der Aufnahme 16 wird von der Öse 20 für niedrige Belastung umschlossen. Der Steckverbinder 18 ist zur Zurrpunktachse 14 um 90° versetzt angeordnet, was eine omnidirektionale Belastung des Zurrpunktes 10 möglich macht, ohne dass dies bei der leichten Öse 20 bzw. bei optional einsetzbaren schweren Ösen 22 für schwerere Lasten zu ungünstigen Biegebelastungen dieser Bauteile führen würde. Da sich die Ösen 20 bzw. 22 optimal ausrichten können, können die auf Zug belasteten Ösen 20 bzw. 22 und das Zurrpunktgehäuse 12 des Zurrpunktes 10 gewichtsoptimiert ausgelegt werden.

Das Zurrpunktgehäuse 12 weist Auflageleisten mit integrierten, jedoch lösbaren Befestigungselementen 30 auf, an denen Fußbodenplatten 80 bzw. Unterbaugehäuse 52 von Rollenbahngeräten 50 aufnehmbar sind.

Die Anordnung der horizontal verlaufenden Zurrpunktachse 14 in Flugrichtung und des um 90° zu diesem versetzt oberhalb davon angeordneten Steckverbinders 18 ermöglicht eine maximale Beweglichkeit der leichten Öse 20 für niedrige Belastung von 180°. Die Endlagen der Öse 20 werden durch zwei Ablagenuten im Zurrpunktgehäuse 12 derart gebildet, dass die leichte Öse 20 für niedrige Belastung entweder in Flugrichtung oder gegen die Flugrichtung mit ihrer Oberkante bündig zur Oberkante des Zurrpunktgehäuses abgelegt wird, ohne das dabei der Steckverbinder 18 gelöst wird. Dadurch können Unfälle durch nur zu einer Seite umlenkbare Ösen, die auf der anderen Seite einen Anschlag besitzen, vermieden werden. Diese stehen aus dem Frachtraumboden hervor und fallen nicht durch die Schwerkraft in ihre Ablage zurück. Ein Überfahren der aus dem Frachtraumboden hervorstehenden Ösen würde zwangsläufig zu deren Unbrauchbarkeit führen.

Aus der Darstellung gemäß Figur 1.1 geht hervor, dass anstelle der leichten Öse 20 optional eine doppelte Augenlasche der Aufnahme 16 mit einer schweren Öse 22, an der ein Gurtstück 23 angedeutet ist, verbunden werden kann.

Figur 1.2 zeigt den Zurrpunkt gemäß Figur 1.1 in der Draufsicht.

Die leichte Öse 20 liegt innerhalb des Zurrpunktgehäuses 12 des Zurrpunktes 10. Die leichte Öse 20 ist mit ihren Ösenaugen 21 mit der doppelten Augenlasche der um die Zurrpunktachse 14 verdrehbaren Aufnahme 16 bewegbar verbunden. Der Steckverbinder 18 durchsetzt sowohl die Ösenaugen 21 als auch die doppelte Augenlasche der Aufnahme 16. Aus der Darstellung gemäß Figur 1.2 gehen die das Zurrpunktgehäuse 12 umgebenden Auflageleisten 84 hervor, an welchen über Befestigungselemente 30 in Figur 1.2 nicht dargestellte Fußbodenplatten 80 befestigt werden. Die Auflageleisten 84 des Zurrpunktgehäuses 12 fluchten mit den Oberkanten 4 der Längsträger 2 und der Querträger 3 des Strukturrasters 1. In das Zurrpunktgehäuse 12 ist ein trittfester Füllkörper 32 eingelassen. Der trittfeste Füllkörper 32 füllt das Innere des Zurrpunktgehäuses 12 plan aus, so dass beim Einbau von Fußbodenplatten 80 eine glatte, stolperstellenfreie Oberfläche entsteht. Der trittfeste Füllkörper 32 ist aus einem elastischen Material gefertigt und weist eine Ausnehmung auf, in welcher die leichte Öse 20 liegt. Das elastische Material und die Form des trittfesten Füllkörpers 32 sind so beschaffen, dass er ein Körpergewicht inklusive Personengepäck trägt, beim Überrollen durch Fahrzeuge elastisch nachgibt und nicht beschädigt werden kann.

Figur 1.3 zeigt den Zurrpunkt gemäß Figur 1.1 in einer um 90° gedrehten Seitenansicht.

Das Zurrpunktgehäuse 12 ist über Befestigungselemente 28 am Strukturraster 1 befestigt. Wie aus der Darstellung gemäß Figur 1.3 hervorgeht, ist die leichte Öse 20 um das Befestigungselement 18 und den Winkelbereich α schwenkbar. Mit dem gestrichelten Bezugszeichen 20 ist die in das Zurrpunktgehäuse 12 eingelassene leichte Öse 20 in ihrer liegenden Position bezeichnet. Die leichte Öse 20 ist einerseits beweglich um den Steckverbinder 18 (vergleiche Figur 1.1) aufgenommen, andererseits ist die Aufnahme 16 um die Zurrpunktachse 14 bewegbar, so dass die leichte Öse 20 sich in alle Richtungen bewegen kann.

Der Darstellung gemäß Figur 1.4 ist die leichte Öse 20 für den Zurrpunkt in der Draufsicht zu entnehmen.

Die leichte Öse 20 umfasst an ihrer der Doppelaugenlasche der Aufnahme 16 zuweisenden Seite Ösenaugen 21, die vom Steckverbinder 18 durchsetzt werden.

Der Darstellung gemäß Figur 1.5 ist eine schwere Öse für den Zurrpunkt zu entnehmen.

Im Unterschied zur Darstellung gemäß Figur 1.4 umfasst die in Figur 1.5 dargestellte schwere Öse 22 drei Ösenaugen 21, so dass beim Durchstecken des Steckverbinders 18 durch die Ösenaugen 21 mehrere Scherungsquerschnitte entstehen und der Steckverbinder 18 und die schwere Öse 22 für schwerere Lasten geeignet sind. An der schweren Öse 22 ist eine Aufnahme 23 dargestellt.

Die Standardbestückung des Zurrpunktes 10 stellt die leichte Öse 20 für niedrige Belastung dar, was das Gesamtgewicht eines Frachtraumbodens minimiert und gleichzeitig die Flexibilität erhöht. Alle Zurrpunkte 10 an einem Frachtraumboden können schnell auf die optional einsetzbare schwere Öse 22 für hohe Belastungen umgerüstet werden. Die schweren Ösen 22 müssen daher nur in begrenzter Anzahl je nach jeweiligem Einsatzzweck mitgeführt werden. Die Belastbarkeit des Zurrpunktes 10 durch die verschwenkbaren Einzelteile Aufnahme 16, Steckverbinder 18, leichte Öse 20 und schwere Öse 22 mit Aufnahme 23 erlauben einen freien Schwenkbereich innerhalb des Zurrpunktgehäuses 12, der durch die in Figur 1.2 dargestellten trittfesten Füllkörper 32 aus elastischem Material bis zur Oberkante des Frachtraumbodens geschlossen wird. Dadurch werden Stolperkanten vermieden, wobei jedoch das Gewicht einer Person incl. Ausrüstung aufgenommen werden kann. Die Füllkörper 32 sind elastisch, um im Schwenkbereich des Zurrpunktgehäuses 12 den Bewegungen der Aufnahme 16 des Steckverbinders 18 sowie der Ösen 20, 22 nachzugeben. Das Material, aus welchem die Füllkörper 32 gefertigt sind, weist eine genügende Elastizität auf, um die Belastung durch Überrollen der Zurrpunkte 10 durch Fahrzeuge aufzunehmen, ohne beschädigt zu werden. Abdeckungen der Zurrpunktgehäuse 12 würden aufgrund der hohen Achslasten von Fahrzeugen zerstört werden. Die Füllkörper 32 können ständig innerhalb des Zurrpunktgehäuses 12 verbleiben, wobei eine sonstige bisherige starre Abdeckung entfernt werden müsste, um eine Benutzung des Zurrpunktes 10 zuzulassen.

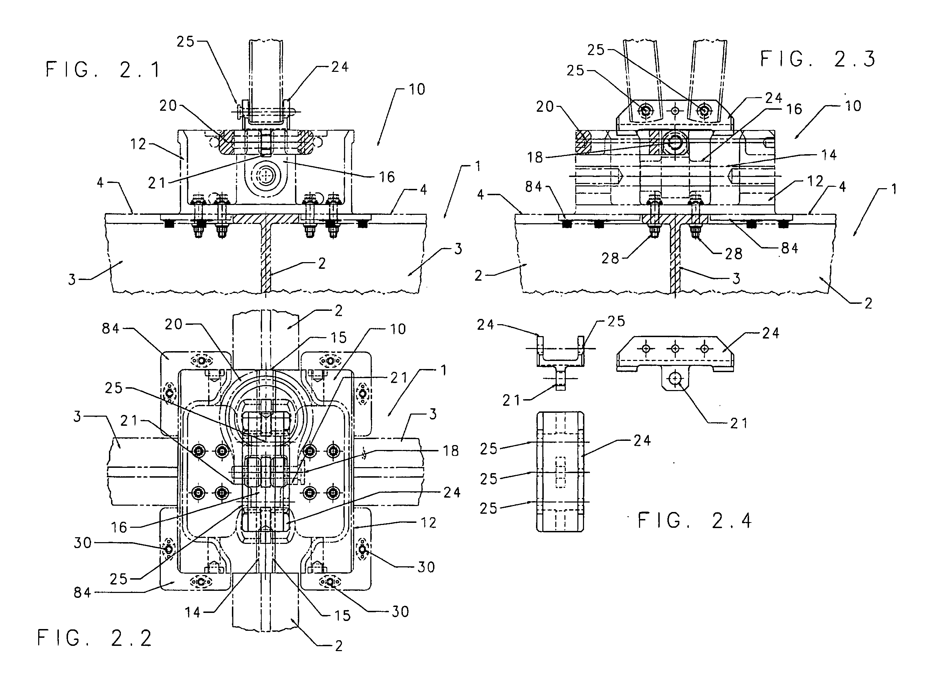

Figur 2.1 zeigt den im Zurrpunkt abgesteckten, leichten Zusatzadapter.

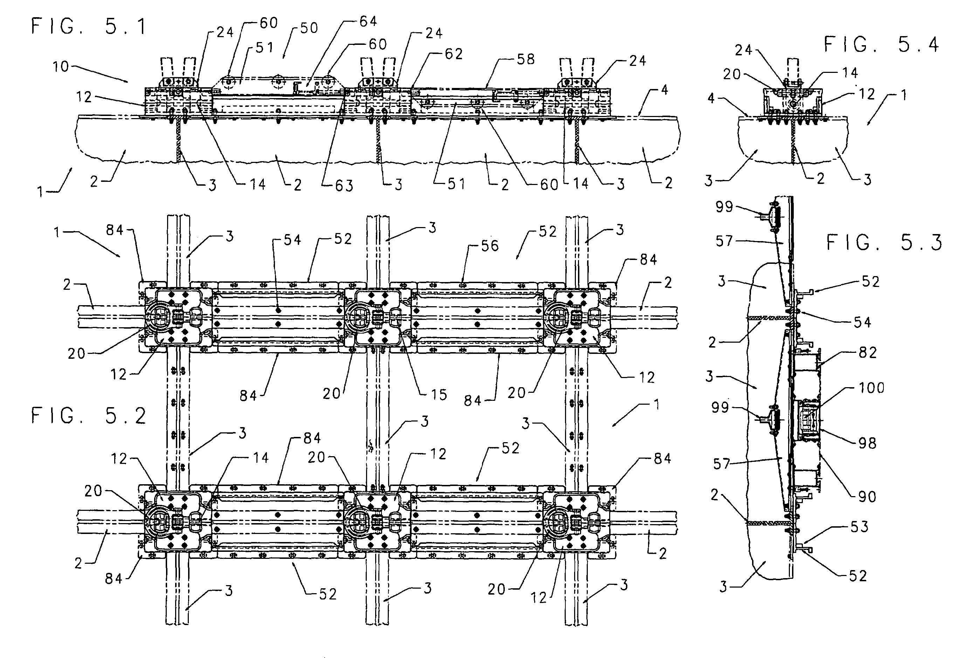

Ist der Zurrpunkt 10 mit der leichten Öse 20 für niedrige Belastung ausgerüstet, kann ein leichter optionaler Zusatzadapter 24 eingesetzt werden. Durch das Ziehen des bolzenförmig ausgebildeten Steckverbinders 18 kann die mittige, in diesem Falle nicht benutzte doppelte Augenlasche der Aufnahme 16 freigegeben werden, der Zusatzadapter 24 eingesetzt werden und durch Einschieben des bolzenförmig ausgebildeten Steckverbinders 18 an der Aufnahme 16 arretiert werden. Der leichte optionale Zusatzadapter 24 sitzt dabei formschlüssig auf dem Zurrpunktgehäuse 12, welches die Aufnahme 16 auf der Zurrpunktachse 14 gehen Verdrehen fixiert. Die leichte Öse 20 für niedrige Belastung befindet sich dabei in einer der beiden im Wesentlichen horizontal verlaufend ausgebildeten Taschen des Zurrpunktgehäuses 12 unterhalb der Oberkante des Frachtraumbodens. Die leichte Öse 20 für niedrige Belastung kann bei Verwendung des leichten Zusatzadapters 24 ebenso wie die trittfest ausgebildeten Füllkörper 32 bei der Benutzung des leichten optionalen Zusatzadapters 24 im Zurrpunktgehäuse 12 des Zurrpunktes 10 verbleiben. In vorteilhafter Weise werden keine zusätzlichen Befestigungselemente sowie Sicherungselemente benötigt, was die Handhabung ebenso vereinfacht, wie die leichte Zugänglichkeit der Aufnahmebohrung bei Einsatz des leichten optionalen Zusatzadapters 24. Die leichten optionalen Zusatzadapter 24 liegen (vergleiche Darstellung gemäß Figur 5.1) mit ihrer Oberkante noch unterhalb der Systemhöhe 5 und behindern daher einen Transport militärischer oder ziviler Paletten bzw. Container nicht.

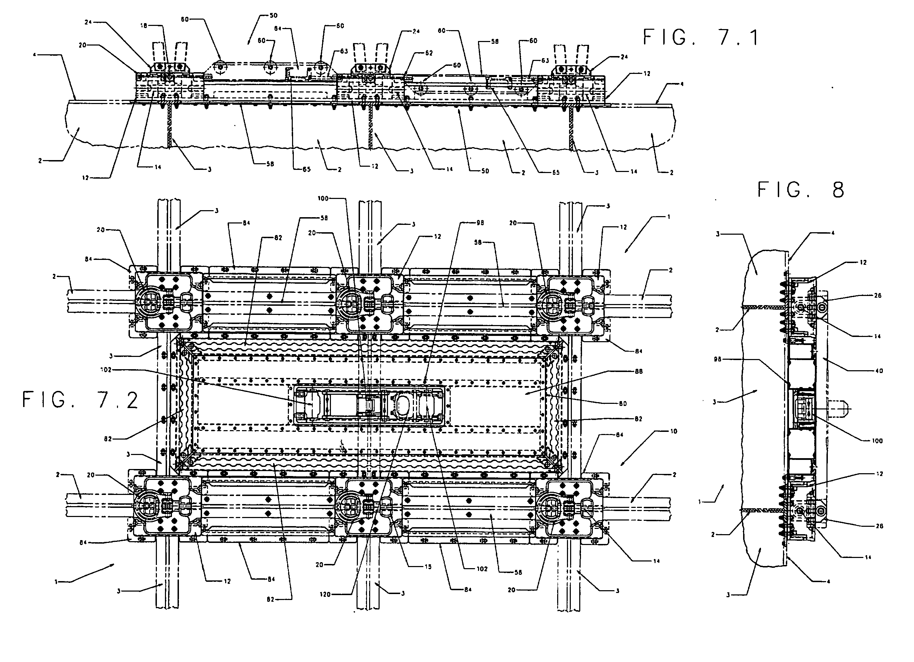

Wird gemäß der Darstellung in Figur 8 eine mehrere Zurrpunkte übergreifende Verbindungsplatte 40 zur Fixierung schwerster Lasten eingesetzt, kommen schwere Zusatzadapter 26 zum Einsatz. Diese weisen eine dreifache Augenlasche auf und werden mittels des bolzenförmig ausgebildeten Steckverbinders 18 in die Aufnahme 16 eingesetzt. Vier schwere optional einsetzbare Zusatzadapter 26 können über eine Verbindungsplatte 40 mit einer zentralen Lastaufnahmeeinheit verbunden werden, so dass Lasten aus militärischen Anforderungen in das Strukturraster 1 des Flugzeugrumpfes über vier Zurrpunkte 10 eingeleitet werden können. Dies erhöht einerseits die Flugsicherheit und verhindert andererseits eine Überlastung sowie eine Beschädigung tragender Flugzeugstruktur.

Figur 2.2 zeigt die Draufsicht auf den Zurrpunkt gemäß der Darstellung in Figur 2.1. Das sich kreuzende Längs- und Querträger 2, 3 umfassende Strukturraster 1 nimmt das Zurrpunktgehäuse 12 auf. Im Zurrpunktgehäuse 12 ist die Zurrpunktachse 14 beidseitig gelagert und nimmt die Aufnahme 16 auf. In der Darstellung gemäß Figur 2.1 ist an der Aufnahme 16 mittels des Steckverbinders 18 der leichte Zusatzadapter 24 aufgenommen. Andererseits ist an der Aufnahme 16 die leichte Öse 20 für niedrige Belastung omnidirektional gelagert. Am leichten Zusatzadapter 24 sind mehrere Öffnungen zur Aufnahme von Bolzen 25 aufgenommen (vergleiche Darstellung gemäß Figur 2.4). Am Zurrpunktgehäuse 12 befinden sich winkelförmig ausgebildete als Dichtflächen dienende Auflageleisten 84, deren Oberseite plan zur Oberseite der Längsträger 2 bzw. der Querträger 3 des Strukturrasters 1 verläuft.

Figur 2.3 zeigt eine Seitenansicht des Zurrpunktes gemäß der Darstellung in Figur 2.1.

Aus der Darstellung gemäß Figur 2.3 geht hervor, dass das Zurrpunktgehäuse 12 über die Befestigungselemente 28 mit dem Strukturraster 1 verbunden ist. Die im Zurrpunktgehäuse 12 verdrehbar, zweifach gelagerte Zurrpunktachse 14 nimmt die Aufnahme 16 auf, an deren Augenlaschen neben der Öse 20 für niedrige Belastung (vergleiche Darstellung gemäß Figur 2.2) der leichte Zusatzadapter 24 aufgenommen ist. Dieser weist an seiner Unterseite lediglich ein Ösenauge 21 auf, welches vom Steckverbinder 18 durchsetzt wird. An den Seitenstegen des leichten Zusatzadapters 24 sind mehrere Bohrungen ausgebildet, welche zur Aufnahme von bolzenförmigen Verbindungselementen 25 dienen, an denen Sitze, Krankenliegen oder sonstige Ausrüstungsgegenstände befestigt werden können.

Figur 2.4 zeigt eine Darstellung des gleichen Zusatzadapters in drei Seitenansichten.

Der leichte Zusatzadapter gemäß den Darstellungen in Figur 2.4 weist ein an seiner Unterseite mittig ausgebildetes Ösenauge 21 auf, welches in der doppelte Augenlasche an der Aufnahme 16 des Zurrpunktes 10 aufgenommen ist. An den Seitenstegen des leichten Zusatzadapters 24 sind die einander gegenüberliegenden Bohrungen zur Aufnahme von bolzenförmig ausgebildeten Befestigungselementen 25 zu erkennen.

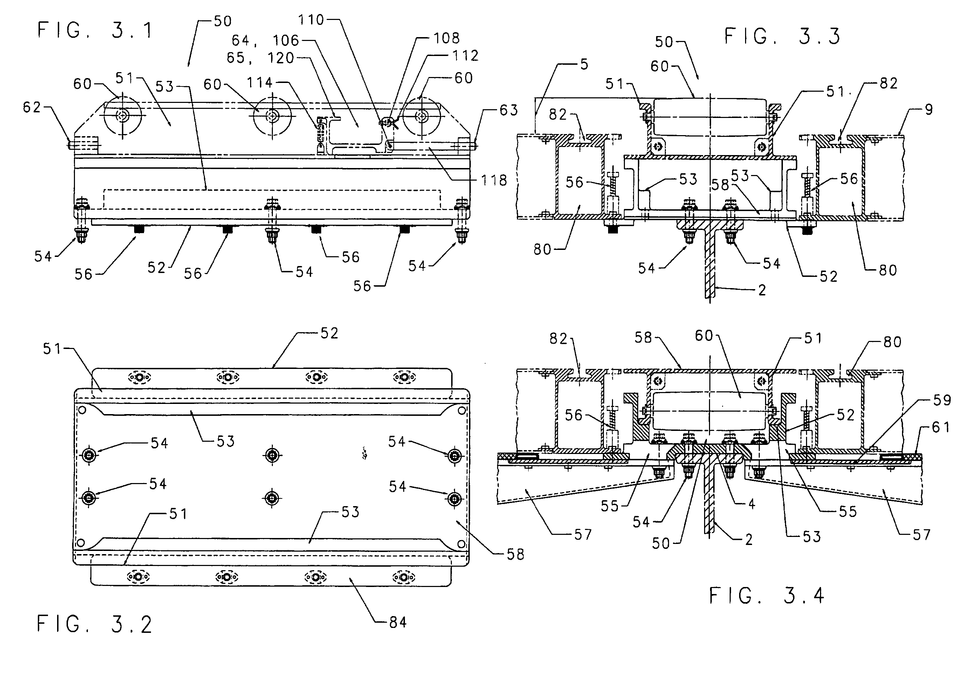

Figur 3.1 zeigt ein Rollenbahngerät.

Ein Rollenbahngerät 50 ist über ein Unterbaugehäuse 52 mit Befestigungselementen 54 dauerhaft mit dem in Figur 3.1 nicht dargestellten Strukturraster 1 verbunden. Das Unterbaugehäuse 52 umfasst Auflageleisten mit integrierten jedoch lösbaren Befestigungselementen 56 für Fußbodenplatten 80 (vergleiche Darstellung gemäß Figur 3.3). Das Unterbaugehäuse 52 dient der Aufnahme des Rollenbahngerätes 50 im abgetauchten und damit überfahrbaren Zustand sowie im aufgerichteten und damit betriebsbereiten Zustand. In jedem Zustand ist eine jeweilige, in Längsrichtung des Rollenbahngerätes 50 angeordnete ununterbrochene Auflage des Rollenbahngerätes 50 auf dem Unterbaugehäuse 52 gewährleistet. Dies führt beim Belasten des Rollenbahngerätes 50 zu einer gleichmäßigen Krafteinleitung in das Strukturraster 1 des Flugzeugrumpfes und vermeidet das Auftreten von Biegebelastungen in Längsrichtung des Rollenbahngerätes 50, was zu einer Gewichtsminimierung des Frachtraumbodens führt. Das Unterbaugehäuse 52 dient als Sammelbecken für Drainageflüssigkeiten aus den benachbart angeordneten Zurrpunkten 10 und den ebenfalls benachbart aufgenommenen Fußbodenplatten 80. Das Rollenbahngerät 50 ist mit Transportrollen 60 mit Lagerachsen und Splinten 112, fixierten Befestigungsbolzen 62, Führungen und bewegbaren Schiebebolzen 63 sowie einem Auslösegriff 65 versehen. Die Komponenten Transportrollen mit Lagern 60, Splinte 112 sowie die Schiebebolzen 63 und der Auslösegriff 65 sind innerhalb einer Befestigungseinheit 64 des Rollenbahngerätes 52 aufgenommen. Der Abstand der Transportrollen 60 auf dem gesamten Frachtraumboden voneinander liegt in Transportrichtung bei maximal 254 mm (10 Zoll) und wird innerhalb des Rollenbahngerätes 50 auf einen Bruchteil davon reduziert. Dies verbessert die Tragfähigkeit des Rollenbahngerätes 50 und wirkt einem Ausfall einzelner Transportrollen 60 durch Überlastung entgegen. Die fixen Befestigungsbolzen 62 sowie die Befestigungseinheit 64 mit Achsesplinten 112, federbelasteten Schiebebolzen 63 und dem Auslösegriff 65 arretieren das Rollenbahngerät 50 an den Enden in Längsrichtung in vier korrespondierenden Aufnahmebohrungen von in Figur 3.1 nicht dargestellten Zurrpunktgehäusen 12. Dies erfolgt derart, dass im abgetauchten und damit überfahrbaren Zustand eine geschlossene Unterseite 58 des Rollenbahngerätes 50 (vergleiche Darstellung gemäß Figur 3.4) nach oben zeigt und mit der Oberseite des Frachtraumbodens auf einer Höhe liegt. Damit bildet die Unterseite 58 des Rollenbahngerätes 50 eine mit dem Frachtraumboden fluchtende, ununterbrochen plane, begehbare oder befahrbare Oberfläche. Die Befestigungseinheit 64 kann im abgetauchten Zustand des Rollenbahngerätes 50 durch eine Bedienöffnung in deren Unterseite 58 über den durch zwei Federn vorgespannten Auslösegriff 65 mit nur einer Hand von dem Zurrpunktgehäuse 12 gelöst werden, in welchem sich die Schiebebolzen 63 befinden und welche bei Betätigung des Auslösegriffes 64 aus dessen Aufnahmebohrungen zurückgezogen werden. Nach einem leichten seitlichen Anheben des Rollenbahngerätes 50 lässt sich dieses zusammen mit den fixen Befestigungsbolzen 62 auf einem gegenüberliegenden zweiten Zurrpunktgehäuse 12 ziehen, ohne das eine zweite Hand des Bedieners zu Hilfe zu nehmen ist. Die Ein-Hand-Bedienbarkeit sichert schnellste Umrüstzeiten des Frachtraumbodens.

Figur 3.3 zeigt das am Strukturraster befestigte, aufgestellte Rollenbahngerät.

Der Darstellung gemäß Figur 3.3 ist zu entnehmen, dass die Mantelflächen der Transportrollen 60 in einer Systemhöhe 5 über der Oberfläche von Dichtblechen 90 der Bodenplatten 80 hervorstehen. Die Transportrollen 60 sind über Bolzen in einem Oberteil 51 des Rollenbahngerätes 50 aufgenommen. Im Unterbaugehäuse 52 befinden sich Auflageflächen 53, auf welchen die abgewinkelten Enden der Stege des Oberteiles 51 gemäß Figur 3.4 versenkten Zustand ruhen, so dass der Rollenbahngerät-Boden 58 mit den Dichtblechen 90 der Fußbodenplatten 80 einen ebenen Frachtraumboden bildet. Aus der Darstellung gemäß Figur 3.3 geht zudem hervor, dass die Fußbodenplatte 80 jeweils Sitzschienenprofile 82 aufweisen. Das Rollenbahngerät 50 ist über Befestigungselemente 56 mit Seitenstegen der Fußbodenplatten 80 verschraubt. Das Unterbaugehäuse 52 des Rollenbahngerätes 50 selbst ist über Befestigungselemente 54 mit dem Strukturraster 1, in diesem Falle dessen Längsträger 2, verschraubt.

Der Darstellung gemäß Figur 3.2 ist eine Draufsicht auf das Rollenbahngerät zu entnehmen. Der Rollenbahngerät-Boden 58 weist seitlich Auflageleisten 84 auf, die als Dichtflächen fungieren. Im Rollenbahngerät-Boden 58 sind mehrere Befestigungselemente 54 aufgenommen, mit welchem das Unterbaugehäuse 52 des Rollenbahngerätes 50 mit dem Strukturraster 1 des Flugzeugsrumpfes verschraubt werden kann. Im Rollenbahngerät-Boden 58 gemäß der Darstellung in Figur 3.2 sind parallel zu den Auflageleisten 84 verlaufende Auflageflächen 53 ausgebildet, die der Aufnahme des versenkbaren Oberteiles 51 des Rollenbahngerätes 50 dienen.

Der Darstellung gemäß Figur 3.4 ist das in die Frachtraumbodenfläche versenkte, mit dieser fluchtende Rollenbahngerät zu entnehmen.

Aus der Darstellung gemäß Figur 3.4 geht hervor, dass der Rollenbahngerät-Boden 58 mit den beidseits von diesem verlaufenden Fußbodenplatten 80 eine ebene, glatte Frachtraumbodenfläche bildet. Das Oberteil 51 des Rollenbahngerätes 50 mit seinen abgewinkelten Enden liegt dabei auf den Auflageflächen 53 des Unterbaugehäuses 52 auf. Die Auflageleisten 84, die als Dichtflächen fungieren, sind einerseits mit dem Unterbaugehäuse 52 verbunden und werden über Befestigungselemente 56 mit den mit Seitenstegen der Fußbodenplatten 80 verschraubt. Das Unterbaugehäuse 52 des Rollenbahngerätes 50 seinerseits ist über Befestigungselemente 54 mit dem Längsträger 2 des Strukturrasters 1 verschraubt.

Wie der Figurensequenz von Figuren 3.1, Figur 3.3 und Figur 3.4 entnommen werden kann, ist ein entriegeltes Rollenbahngerät 50 aus seiner Aufnahme zwischen zwei Zurrpunktgehäusen 12 entnehmbar und kann umgedreht mit der geschlossenen Unterseite 58 nach unten und knapp unter der Frachtraumbodenoberkante mit den fixen Befestigungsbolzen 62 in Aufnahmebohrung eines der beiden Zurrpunktgehäuse 12 eingesteckt werden. Danach wird das Oberteil 51 des Rollenbahngerätes 50 auf dem Unterbaugehäuse 52 abgesetzt, wobei die Schiebebolzen 63 in die Aufnahmebohrung des anderen Zurrpunktgehäuses 12 eingeschoben werden. Damit wird eine Systemhöhe 5 zwischen der Oberseite des Frachtraumbodens und der Oberseite der Transportrollen 60 realisiert, wobei die fixen Befestigungsbolzen 62 und die bewegbaren Schiebebolzen 63 der Befestigungseinheit 64 wie auch im abgetauchten Zustand des Rollenbahngerätes 50 nur der Arretierung des Rollenbahngerätes 50 und nicht der Kraftübertragung dienen.

Die Befestigungseinheit 64 kann über den Auslösegriff 65 sowohl von der Oberseite als auch von der Unterseite des Rollenbahngerätes 50 her gelöst werden, wobei sich der Auslösegriff 65 um eine mit zwei Splinten im Rollenbahngerät 52 gesicherte Achse dreht. Dabei werden die beiden bewegbaren Schiebebolzen 63 zwangsweise gleichzeitig durch ihre Führungen zurückgezogen. Beim Einklinken des Rollenbahngerätes 50 in ein Zurrpunktgehäuse 12 werden über dessen Anlaufschräge automatisch die bewegbaren Schiebebolzen 63 gegen die Federkräfte zurückgeschoben und schnappen beim Erreichen der Aufnahmebohrung des Zurrpunktgehäuses 12 automatisch und zwangsweise gleichzeitig in das Zurrpunktgehäuse 12 ein. Bei diesem Vorgang wird die Befestigungseinheit 64 nicht betätigt.

Die Vorteile des erfindungsgemäß vorgeschlagenen Rollenbahngerätes 50 mit der Befestigungseinheit 64 liegen in der beidseitigen, von Ober- oder Unterseite des Rollenbahngerätes 50 ausgehenden und einhändigen Bedienbarkeit des Rollenbahngerätes 50. Dies erleichtert nicht nur dessen Bedienung sondern ermöglicht auch eine zwangsweise gleichzeitige Verriegelung der beiden bewegbaren Schiebebolzen 63, was die Sicherheit erhöht. Durch einen hochstehenden Auslösegriff 65 ist erkennbar, falls einer der Schiebebolzen 63 und damit zwangsweise auch der andere der Schiebebolzen 63 nicht in die Ausnahmebohrung des Zurrpunktgehäuses 12 eingeschnappt ist und somit das Rollenbahngerät 50 nicht zuverlässig arretiert ist.

Das Unterbaugehäuse 52 des Rollenbahngerätes 50 umfasst Drainageöffnungen 55. Diese liegen in Bezug auf die Oberkante 4 des Strukturrasters 1, d.h. in Bezug auf die Oberkante 4 des Längsträgers 2 so, dass die Drainageflüssigkeit bereits ab der Oberkante 4 der Längsträger 2 bzw. der Querträger 3 des Strukturrasters 1 abgeleitet wird. Damit ist sichergestellt, dass sämtliche durch die Fugen zwischen Rollenbahngerät Bodenfläche58 und Fußbodenplatten 80 eintretende Flüssigkeit in Sammelwannen 57 abgeleitet wird. Die Sammelwannen 57 werden bevorzugt so gestaltet, dass über die Drainageöffnungen 55 jeweils in die Sammelwannen 57 einsickernde bzw. einströmende Flüssigkeit in den Sammelwannen am Drainagetrichter 99 mit einem Filtereinsatz geleitet werden, von denen aus sie einem Drainagesystem an einem Flüssigkeitsableitungssystem zugeleitet werden. Unterhalb der Befestigungselemente 56 zur Fußbodenplatte 80 befinden sich Dichtbleche 59 sowie seitlich versetzt dazu Dichtleisten 61, mit welchen die Fußbodenplatten 80 an der Unterseite abgedichtet werden.

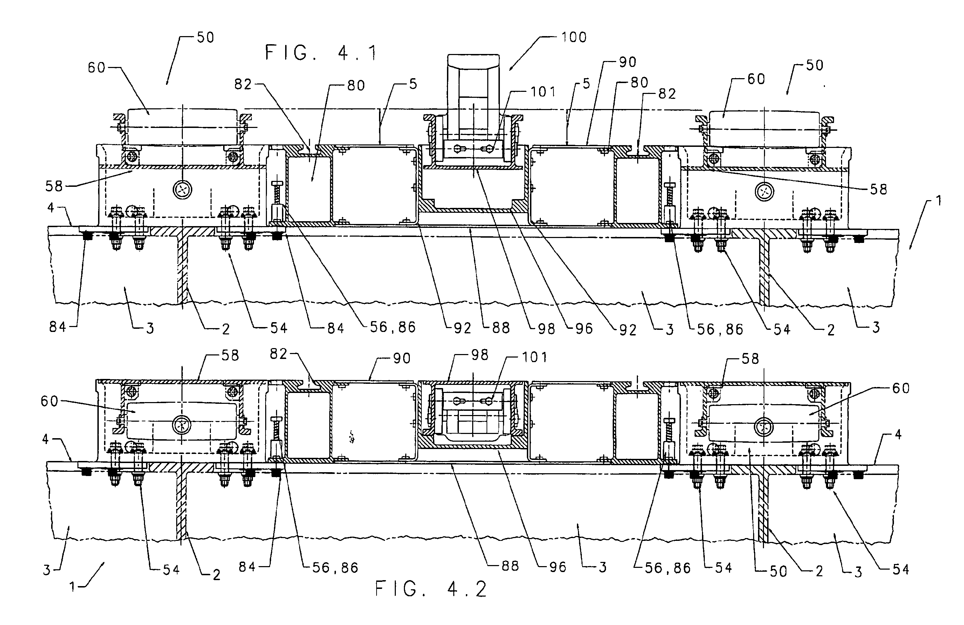

Der Darstellung gemäß Figur 4.1 sind aufgestellte Rollenbahngeräte und Verriegelungseinheiten samt Fußbodenplatten, die auf dem Strukturraster eines Flugzeugrumpfes angeordnet sind, zu entnehmen.

Eine Fußbodenplatte 80 umfasst einen umlaufenden Rahmen aus Sitzschienenkastenprofilen 82, die an ihrer Oberseite ein Sitzschienenkastenprofil 82 aufweisen. Die Rahmenstruktur der Fußbodenplatten 80 ist über fest an dessen Sitzschienenkastenprofilen 82 montierte Einbauschrauben 86 leicht lösbar mit dem Strukturraster 1 des Flugzeugrumpfes, den Auflageleisten 84 der Zurrpunktgehäuse 12 und deren Befestigungselemente sowie den Auflageleisten 84 der Unterbaugehäuse 52 von Rollenbahngeräten 50 und deren Befestigungselementen verbunden. Die auf den Auflageflächen des Strukturrasters 1 des Flugzeugrumpfes, d.h. dem Längsträger 2 und dem Querträger 3, den Auflageleisten 84 der Zurrpunktgehäuse 12 und der Auflageleisten 84 der Unterbaugehäuse 52 gleichmäßig aufliegende, um die Fußbodenplatte 80 umlaufende und in die Sitzschienenkastenprofile 82 der Fußbodenplatte 80 integrierte Dichtung verschließt den Frachtraumboden. Die Dichtfläche verhindert, ohne durch mehrfaches Lösen und Montieren der Fußbodenplatte 80 an Dichtfähigkeit zu verlieren, ein Durchsickern von Drainageflüssigkeit und Festkörpern durch den Frachtraumboden in den Unterflurbereich des Flugzeugrumpfes. Die leichte und problemlose Demontage und Montage der Fußbodenplatte 80 über die Einbauschrauben 86 erleichtert Unterflurarbeiten und beschleunigt diese durch optimale Zugänglichkeit des Unterflurbereiches. Da die Fußbodenplatten 80 einfach entnehmbar sind, entstehen relativ große Öffnungen des Frachtraumbodens bei der Demontage einer oder mehrerer Fußbodenplatten 80.

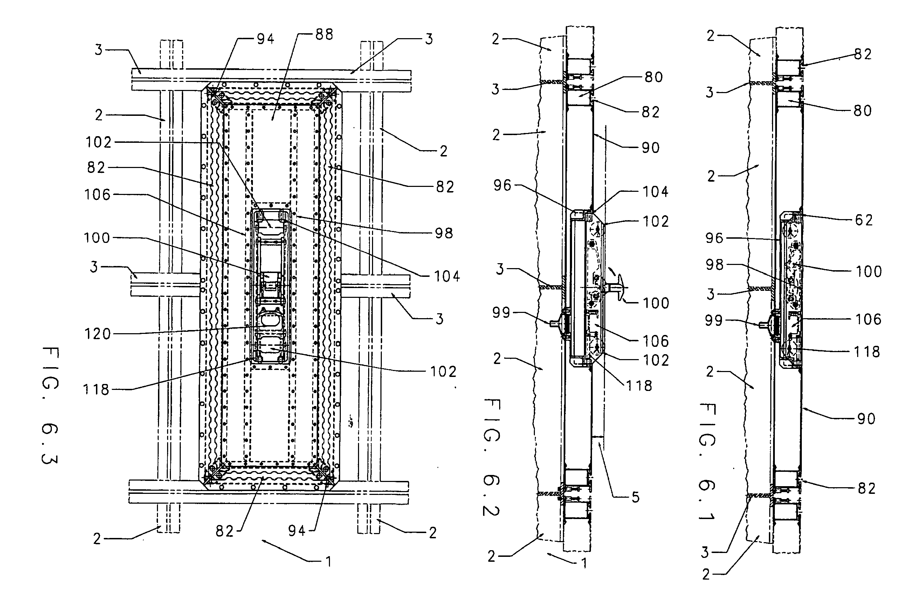

Die Sitzschienenkastenprofile 82 sind über Eckbeschläge 94 (vergleiche Figur 6.3) formschlüssig miteinander verbunden. Zusätzlich wird nur je ein komplettes, fest mit den Sitzschienenkastenprofile 82 verbundenes Bodenblech 88 sowie ein Deckblech 90 verwendet, die wiederum untereinander durch Stützprofile 92 verbunden sind. Eine Unterbauwanne 96 ist fest mit dem Deckblech 90 sowie dem Stützprofilen 92 verbunden, was eine äußerste biege- und verbindungssteife Baugruppe erzeugt, die in der Lage ist, den geforderten hohen Belastungen durch Fahrzeuge - im Falle militärischer Anwendungen - standzuhalten. Die feste Integration der Unterbauwanne 96 in die Fußbodenplatte 80 ermöglicht das Einleiten von Halte- und Führungskräften, aus den militärischen und zivilen Anforderungen über die verschiedenen Einsätze in die Unterbauwanne 96 und durch diese in das Strukturraster 1. Die Lage, Größe und Gestalt der Unterbauwanne 96 ist im Rahmen der baugleichen Sitzschienenkastenprofile 82 den gegebenen Anforderungen anpassbar, was eine hohe Flexibilität bei gleichzeitiger Standardisierung der Fußbodenplatten 80 bedeutet.

Wie aus den Figuren 4.1 und 4.2 hervorgeht, dient eine Anordnungsmöglichkeit und Auslegung der Unterbauwanne 96 der Aufnahme eines Riegelträgers 98. Der Riegelträger 98 ist - wie in Figur 4.2 dargestellt - derart in die Unterbauwanne 96 einführbar, dass dieser im abgetauchten Zustand überfahrbar ist. Im in Figur 4.1 dargestellten Zustand ist der Riegelträger 98 betriebsbereit. Im abgetauchten und damit überfahrbaren Zustand gemäß der Darstellung in Figur 4.2 ist eine in Längsrichtung der Unterbauwanne 96 verlaufende Auflagefläche des Riegelträgers 98 von Auflageleisten der Unterbauwanne 96 abgestützt, was beim Überfahren des Riegelträgers 98 eine gleichmäßige Krafteinleitung in das Strukturraster 1 des Flugzeugrumpfes ermöglicht und das Auftreten von Biegebelastungen in Längsrichtung des Riegelträgers 98 vermeidet. Der Riegelträger 98 umfasst einen Klappriegel 100, der um eine Riegelachse 101 schwenkbar ist sowie je eine davor und dahinter befindliche Transportrolle und die Befestigungseinrichtungen für die Unterbauwanne.

Wie aus Figur 4.1 weiterhin entnehmbar ist, sind benachbart zur Fußbodenplatte 80 jeweils Rollenbahngeräte 50 dargestellt, deren Transportrollen 60 um die Systemhöhe 5 über den Frachtraumboden, d.h. über die Deckbleche 90 hervorstehen. Die Rollenbahngeräte 50 sind über Befestigungselemente 54 mit dem Strukturraster 1, d.h. dem Längsträger 2 oder dem Querträger 3 des Strukturrasters 1 verbunden. Die Auflageleisten 84, die an den Unterbaugehäusen 52 der Rollenbahngeräte 50 ausgebildet sind, sind über die Einbauschrauben 86 mit den Sitzschienenkastenprofilen 82 der Fußbodenplatte 80 verbunden.

Der Darstellung gemäß Figur 4.2 ist eine weitestgehend ebene Frachtraumbodenfläche zu entnehmen, da sowohl die beiden Rollenbahngeräte 50 als auch der Riegelträger 98 in umgekehrter Lage, d.h. ihre Stauposition entweder in der Unterbauwanne 96 oder im Unterbaugehäuse 52 aufgenommen sind. Der Rollenbahngerät-Boden 58, die Deckbleche 90 der Fußbodenplatten 80 und die Bodenfläche des Riegelträgers 98 bilden eine ebene, glatte Frachtraumbodenoberfläche, die ohne weiteres im Falle militärischer Zwecke von Fahrzeugen befahrbar ist. Die Transportrollen 60 und der Klappriegel 100 sind in ihrer inaktiven Position jeweils in den Frachtraumboden abgetaucht und können bei Bedarf sofort wieder einsatzbereit gemacht werden, indem sie einfach, einhändig aus ihrer abgetauchten Lage in ihre in Figur 4.1 dargestellten, aktiven Positionen umsteckbar sind.

Der Darstellung gemäß Figur 5.1 ist eine Seitenansicht von Zurrpunkten und Rollenbahngeräten, die an einem Strukturraster aufgenommen sind, zu entnehmen.

Aus der Darstellung gemäß Figur 5.1 geht hervor, dass zwischen einzelnen Zurrpunktgehäusen 12, die jeweils eine Zurrpunktachse 14, der daran aufgenommene Aufnahme sowie einen leichten Zusatzadapter 24 aufweisen, Rollenbahngeräte 50 zwischengeschaltet sind. Eines der in Figur 5.1 dargestellten Rollenbahngeräte 50 befindet sich mit seinem Rollenbahngerät-Boden 58 abgesenkt in die Frachtraumbodenfläche eingelassen, während das andere der Rollenbahngeräte 50 in seiner Einsatzposition dargestellt ist. In diesem Falle ragen die Transportrollen 60 um die Systemhöhe 5 über die Frachtraumbodenfläche hervor. Das aktive, betriebsbereite Rollenbahngerät 50 ist über die Schiebebolzen 63 der Befestigungseinheit 64 in entsprechenden Aufnahmeöffnungen des mittleren Zurrpunktgehäuses 12 arretiert, während die fixen Befestigungsbolzen 62 in das links außen dargestellte Zurrpunktgehäuse 12 hineinragen. Jedes der Zurrpunktgehäuse 12 umfasst eine leichte Öse 20 für niedrige Belastungen.

Figur 5.2 zeigt die Draufsicht auf das Strukturraster gemäß der Darstellung in Figur 5.1.

Aus der Darstellung gemäß Figur 5.2 geht hervor, dass auf den Längsträgern 2 des Strukturrasters 1, die mit den Querträgern 3 verbunden sind, zwischen den einzelnen Zurrpunktgehäusen 12 Rollenbahngeräte 50 integriert sind. Von den Rollenbahngeräten 50 sind in Figur 5.2 nur die beiden Unterbaugehäuse 52 dargestellt. Deren Auflageleisten 84 fluchten mit Auflageleisten 84, die die Zurrpunktgehäuse 12 umgeben. Die Oberkante 4, der Querträger 3, die Auflageleisten 84 der Unterbaugehäuse 52 und die Auflageleisten 84 der Zurrpunktgehäuse 12 bilden die Auflageflächen, auf welche in Figur 5.2 nicht dargestellte Fußbodenplatten 80 aufgelegt werden. In den Zurrpunktgehäusen 12 ist jeweils eine leichte Öse 20 die niedrige Belastung omnidirektional bewegbar eingelassen. Die Unterbaugehäuse 52 sind über Befestigungselemente 54 mit den Längsträgern 2 verbunden. In die Auflageleisten 84, welche zusammen mit den Fußbodenplatten 80 die Dichtflächen bilden, werden in Figur 5.2 nicht dargestellte Einbauschrauben 86 bzw. 30 eingeschraubt, mit welchen die Fußbodenplatten 80 zwischen den Zurrpunktgehäusen 12 bzw. den Unterbaugehäusen 52 befestigt werden. Der Aufbau der Zurrpunktgehäuse 12 wurde bereits im Zusammenhang mit den Figuren 1.1 bis 2.2 beschrieben.

Figur 5.3 zeigt ein am Strukturraster befestigtes Unterbaugehäuses eines Rollenbahngerätes.

Vom Rollenbahngerät 50 ist in der Darstellung gemäß Figur 5.3 lediglich das Unterbaugehäuse 52 dargestellt mitsamt seiner Auflageflächen 53 zur Aufnahme des Oberteils 51 des Rollenbahngerätes 50. Seitlich am Unterbaugehäuse 52 befinden sich die Auflageflächen 84, die zusammen mit den die Fußbodenplatten 80 umschließenden Sitzschienenkastenprofilen 82 eine Dichtfläche bilden. An den in Figur 5.3 dargestellten Sammelwannen 57 zur Aufnahme von Drainageflüssigkeit befinden sich in der Mitte die Drainagetrichter 99, die einen Filtereinsatz aufweisen. Der Filtereinsatz ist in einem Filterhalter montiert. Die Reinigung der Sammelwanne 57 bzw. der Austausch des im Drainagetrichter 99 aufgenommenen Filtereinsatzes erfolgt einfach durch schnelles Entfernen der Fußbodenplatte 80, wonach die Sammelwanne 57 von der Oberseite her freiliegt und leicht zugänglich ist. Gemäß der Darstellung in Figur 5.3 befindet sich oberhalb der Sammelwanne 57 ein Klappriegel 100, der in Riegelträger 98 aufgenommen ist. Diese Komponenten sind in ein Deckblech 90 einer Fußbodenplatte 80 integriert dargestellt. Nach Entnahme der Fußbodenplatte 80 durch Lösen der Befestigungen 56, kann die Fußbodenplatte 80 einfach entnommen werden, so dass die Sammelwanne 57 leicht zugänglich ist.

Der Darstellung gemäß Figur 5.4 ist die Ansicht eines Zurrpunktes mit Zusatzadapter zu entnehmen.

In Figur 5.4 ist ein Zurrpunktgehäuse 12 gemäß der Darstellung in Figur 5.1 wiedergegeben. Das Zurrpunktgehäuse 12 umfasst eine Zurrpunktachse 14, an welcher unter Zwischenschaltung einer Aufnahme 16 (nicht näher dargestellt) eine leichte Öse 20 für niedrige Belastung omnidirektional aufgenommen ist. Die leichte Öse 20 liegt fluchtend innerhalb des Zurrpunktgehäuses 12, wobei in der Darstellung gemäß Figur 5.4 an der Aufnahme ein Zusatzadapter 24 aufgenommen ist.

Figur 6.1 zeigt eine Fußbodenplatte mit versenktem Riegelträger in der Seitenansicht.

Die Fußbodenplatten 80 liegt indirekt über das Unterbaugehäuse 52 der Rollenbahngeräte 50 und die Zurrpunktgehäuse 12 auf den Längsträgern 2 sowie direkt auf Querträgern 3 des Strukturrasters 1 in einem Flugzeugrumpf auf. Die Unterbauwanne 96 nimmt den Riegelträger 98 in gestauter Position auf, so dass dessen Rückseite mit den Deckblechen 90 der Fußbodenplatte 80 eine ebene, glatte, weitestgehend ununterbrochene Fläche bildet. Der Riegelträger 98 weist ebenfalls eine Befestigungseinheit 106 auf, welche sowohl fixe Befestigungsbolzen 104 als auch bewegbare Befestigungsbolzen 118 enthält. Mit diesen ist der Riegelträger 98 in der Unterbauwanne 96 fixiert. Die Befestigungseinheit 106 ist analog zur Befestigungseinheit 64 über die Rollenbahngeräte 50 gemäß der Darstellung in der Figur 3. 1 aufgebaut.

Der Klappriegel 100 befindet sich in seiner in Figur 6.1 dargestellten Position gestreckt und abgeklappt.

Figur 6.2 zeigt eine Fußbodenplatte mit aufgestellter Verriegelungseinheit in der Seitenansicht.

Aus der Darstellung gemäß Figur 6.2 geht hervor, dass in diesem Falle der Riegelträger 98 in aktivierter Position an der Unterbauwanne 96 aufgenommen ist. Die fixen Befestigungsbolzen 104 sowie die Schiebebolzen 118 sind in entsprechende Aufnahmeöffnungen der Unterbauwanne 96 arretiert. Aufgrund der aufgestellten Seitenflächen des Riegelträgers 98 ergibt sich eine Systemhöhe, gemessen von den Transportrollen 102 zur Oberseite des Deckbleches 90, die mit Bezugszeichen 5 gekennzeichnet ist. Der Klappriegel 100 ist in eine über die Systemhöhe 5 herausragende Position gestellt. Analog zur Darstellung gemäß Figur 6.1 liegen die Fußbodenplatten 80 mit integriertem Riegelträger 98 auf der Oberkante 4 des Strukturrasters 1, Längsträger 2 und Querträger 3 umfassend, auf.

Der Darstellung gemäß Figur 6.3 ist die Draufsicht auf die in den Figuren 6.1 und 6.2 in Seitenansicht dargestellte Fußbodenplatte näher zu entnehmen.

Aus der Darstellung gemäß Figur 6.3 geht hervor, dass die Fußbodenplatte 80 ein sich umlaufend erstreckendes Sitzkastenschienenprofil 82 enthält. Die einzelnen Abschnitte des Sitzschienenkastenprofils 82 sind über Eckbeschläge 94 miteinander verbunden. Mittig auf das Bodenblech 88 ist oberhalb eines Querträgers 3 des Strukturrasters 1 der Riegelträger 98 aufgenommen. Der Riegelträger 98 umfasst den Klappriegel 100, der um eine Riegelachse 101 bewegbar ist. Der Riegelträger 98 ist über eine Befestigungseinheit 106 betätigbar. Die Befestigungseinheit 106 umfasst einen Auslösegriff 120, der auf die federbelastet ausgebildeten Schiebebolzen 118 wirkt. Mit diesem kann der Riegelträger 98 in seiner Unterbauwanne 96 (vergleiche Darstellungen in den Figuren 6.1 und 6.2) verriegelt bzw. entriegelt werden. Den Klappriegel 100 sind Transportrollen 102 vorgeschaltet. Durch die Transportrollen 102 wird ein unerwünschtes Abtauchen sowohl von militärischen als auch zivilen Paletten und Containern unter die Systemhöhe 5 oberhalb der Frachtraumbodenoberkante verhindert. Zudem wird nachhaltig die Transportfähigkeit des gesamten Frachtraumbodens durch eine erhöhte Transportrollendichte verbessert, ohne dass zusätzliche Rollenbahngeräte 50 installiert werden müssten. Die Befestigungseinheit 106 kann in abgetauchtem Zustand des Riegelträgers 98 durch eine Bedienöffnung an der Unterseite über den durch zwei Federn vorgespannten Auslösegriff 120 mit nur einer Hand von der Unterbauwanne 96 gelöst werden. Die beiden Schiebebolzen 118 fahren aus den Aufnahmebohrungen in der Unterbauwanne 96 zurück und nach leichtem einseitigen Anheben des Riegelträgers 98 lässt sich dieser zusammen mit den fixen Befestigungsbolzen 104 aus der Unterbauwanne 96 ohne Zuhilfenahme einer zweiten Hand ziehen. Der nun lose Riegelträger 98 wird umgedreht und mit der geschlossenen Unterseite nach unten mit den fixen Befestigungsbolzen 104 in die Aufnahme der Unterbauwanne 96 gesteckt, danach auf einer in Querrichtung zur Unterbauwanne 96 angeordneten oberen Auflageleiste der Unterbauwanne 98 abgesetzt. Dabei klinken die Schiebebolzen 118 in die Aufnahmebohrungen der Unterbauwanne 96 und arretieren den Riegelträger 98. Die fixen Befestigungsbolzen 104 und die Schiebebolzen 118 der Befestigungseinheit 6 dienen nicht nur der Arretierung des Riegelträgers 98, sondern auch der Kraftübertragung der horizontalen und vertikalen Haltekräfte nach oben, welche durch die militärischen und zivilen Paletten und Container verursacht werden. Die fixen Befestigungsbolzen 104 und die Schiebebolzen 118 der Befestigungseinheit 106 sowie die Aufnahmebohrungen der Unterbauwanne 96 sind dementsprechend verstärkt ausgeführt.

Sowohl zum Führen als auch zum Arretieren militärischer oder ziviler Paletten und Container bei einer Systemhöhe von 5 oberhalb der Frachtraumbodenoberkante, kann der Klappriegel 100 bei Bedarf aufgestellt oder auch wieder abgeklappt werden, so dass er im Riegelträger 98 unterhalb der Systemhöhe 5 untergebracht ist. Zusammen mit diesem kann er in der Fußbodenplatte 80 schnell gedreht werden, um einen glatten und geschlossenen Frachtraumboden zu erhalten, der das Begehen und Befahren ermöglicht.

Der Darstellung gemäß Figur 7.1 ist die Seitenansicht der Fußbodenplatte mit Zurrpunkten, aufgestellten und versenkten Rollenbahngeräten 50 zu entnehmen. Die Darstellung gemäß Figur 7.1 korrespondiert im Wesentlichen zur Darstellung gemäß Figur 5.1, bei welcher zwischen den einzelnen Zurrpunktgehäusen 12 Rollenbahngeräte 50 integriert sind. Eines der Rollenbahngeräte 50 befindet sich in seiner aufgestellten Position, während das andere der Rollenbahngeräte 50 mit dem Rollenbahngerät-Boden 58 nach oben weist. Beide Rollenbahngeräte 50 enthalten die Befestigungseinheit 64 sowie die Transportrollen 60. Beide Befestigungseinheiten 64 sind sowohl von der Oberseite des Rollenbahngerätes 50 als auch durch dessen Boden 58 eigenhändig betätigbar. Der Vollständigkeit halber sei erwähnt, dass die in den Zurrpunktgehäusen 12 aufgenommene Zurrpunktachse 14 jeweils einen leichten Adapter 24 aufweist sowie eine in ihrer Horizontallage gelegte leichte Öse 20 zur Befestigung niedriger Lasten.

Figur 7.2 ist die Draufsicht auf die Fußbodenplatte gemäß der Darstellung in Figur 7.1 zu entnehmen.

In der Darstellung gemäß Figur 7.2 sind auf dem Strukturraster 1 fix befestigte Zurrpunktgehäuse 12, eine Fußbodenplatte 80 mit integriertem Riegelträger 98 als auch zwischen den einzelnen Zurrpunktgehäusen 12 eingelassene Unterbaugehäuse 52 für Rollenbahngeräte 50 dargestellt. Die Unterbaugehäuse 52 der Rollenbahngeräte 50 weisen jeweils die Auflageleisten 84 auf, die auch an den Zurrpunktgehäusen 12 ausgebildet sind. Auf diesen liegt die Fußbodenplatte 80 mit ihrem Bodenblech 88 auf. Über in Figur dargestellte, am Rand der Fußbodenplatte 80 befindliche Einbauschrauben 86 ist das Sitzschienenkastenprofil 82 mit den Auflageleisten 84 des Zurrpunktgehäuses 12 und der Unterbaugehäuse 52 der Rollenbahngeräte 50 dichtend verbunden. Die Unterbaugehäuse 52 liegen mit ihrer Bodenfläche 98 auf den Längsträgern 2 des Strukturrasters 1 auf und sind über Befestigungselemente 54 mit diesen dauerhaft verbunden. Gleiches gilt für die Zurrpunktgehäuse 12, die auf den Querträgern 3 des Strukturrasters 1 verschraubt sind. Jedes der Zurrpunktgehäuse 12 umfasst eine in horizontaler Lage wiedergegebene leichte Öse 20 für niedrige Belastung.

Der Darstellung gemäß Figur 8 ist eine mehrere Zurrpunkte 10 übergreifende Verbindungsplatte 40 zur Befestigung schwerster Lasten zu entnehmen. Aus der Darstellung gemäß Figur 8 geht hervor, dass die Verbindungsplatte 40 über schwere Zusatzadapter 26 jeweils mit zwei dargestellten und zwei nicht in Figur 8 dargestellten Zurrpunktgehäusen 12 von Zurrpunkten 10 verbunden ist. Deren Zusatzadapter 26 wird über die Aufnahme 16 (vergleiche Darstellung gemäß Figur 1.1 bis 2.2) mit der Zurrpunktachse 14 des Zurrpunktgehäuses 12 verbunden. Die Zurrpunktgehäuse 12 sind auf der Oberkante 4 des Strukturrasters 1, Längsträger 2 und Querträger 3 umfassend, über Befestigungselemente 54 verschraubt. Unterhalb der Verbindungsplatte 40 befindet sich ein Riegelträger 98 mit eingeklappten Klappriegel 100, d.h. in seiner in die Fußbodenplatte 80 abgetauchten Position, so dass sich eine glatte Flachraumbodenfläche ergibt, die im Falle von Figur 8 von einer Verbindungsplatte 40 überdeckt ist. Mit Hilfe der Verbindungsplatte 40 gemäß der Darstellung in Figur 8 kann die Belastung durch eine extrem schwere Last auf vier Zurrpunkte 10 im Frachtraumboden verteilt werden, so dass die mechanische Beanspruchung eines einzigen Zurrpunktes 10 bzw. Zurrpunktgehäuses 12 erheblich herabgesetzt werden kann. Durch die Verbindungsplatte 40 ist die Einleitung auch größter Lasten in das Strukturraster 1 des Flugzeugrumpfes möglich.

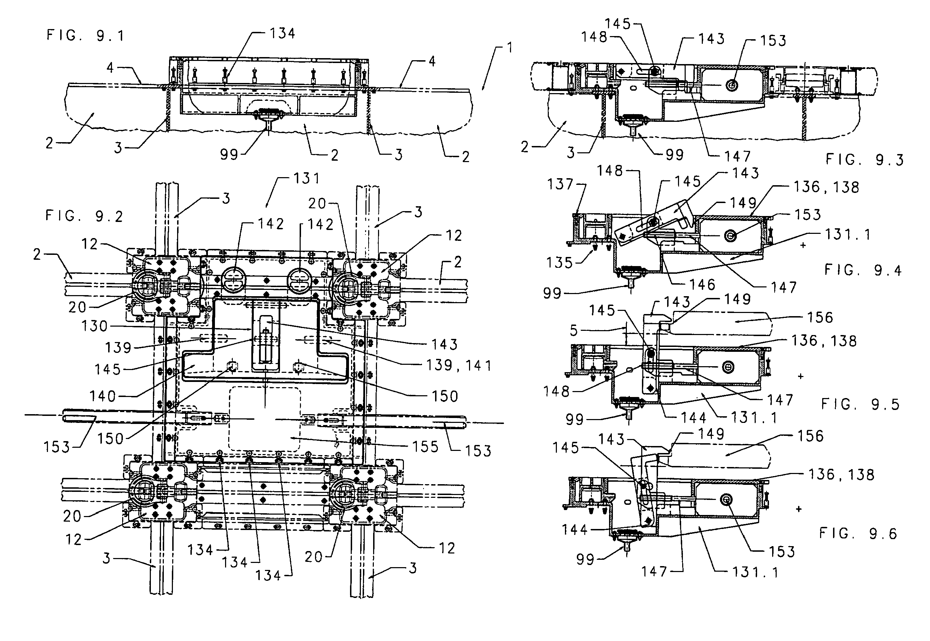

Der Figurensequenz der Figuren 9.1 bis 9.6 sind Ausführungsvarianten eines elektromotorisch betätigbaren, für militärische Zwecke nutzbaren Verriegelungssystems zu entnehmen, wobei die dort dargestellten Riegelelemente in verschiedenen Betriebspositionen dargestellt sind.

Figur 9.1 zeigt in schematischer Darstellung das Strukturraster 1, Querträger 3 und Längsträger 2 umfassend, wobei die Oberkante des Strukturrasters 1 durch Bezugzeichen 4 identifiziert ist. Unterhalb der Oberkante 4 des Strukturrasters 1 befindet sich eine Sammelwanne, die einen Drainagetrichter 99 mit auswechselbar gestaltetem Filtereinsatz umfasst. Auf dem Strukturraster 1 ist mittels Befestigungselementen 134 teilweise eine Fußbodenplatte dargestellt.

Figur 9.2 zeigt die Draufsicht auf eine für militärische Zwecke nutzbare Verriegelungseinheit 131 eines Militärgerätes 130. Die Verriegelungseinheit 131 für militärische Zwecke ist über ein Gehäuse 131.1 sowie ein Gehäuse 132 einer Führungseinheit 133 mittels der Befestigungselemente 134 (vgl. Darstellung gemäß Figur 9.1) lösbar an den Querträgern 3 des Strukturrasters 1 des Flugzeugrumpfes montiert. Ferner wird die Verriegelungseinheit 131 am Zurrpunktgehäuse 12 und an den Unterbaugehäusen 52 bzw. 96 und mit weiteren Befestigungselementen 135 fest auf den Längsträgern 2 des Strukturrasters 1 des Flugzeugrumpfes aufgenommen. Ein Gehäusedeckel 136 ist über Verbindungselement 137 mit dem Gehäuse 131.1 der Verriegelungseinheit 131 verbunden. Ein Gehäusedeckel 138 ist über Verbindungselemente 137 mit dem Gehäuse 132 der Führungseinheit 133 verbunden.

Die Verriegelungseinheit 131 umfasst Achsbolzen mit Torsionsfeder 139, welche die Drehung einer Riegelschiene 140 um 90 ° erlauben, wobei die Torsionsfedern an den Achsbolzen 139 ein Aufstellen der Riegelschiene 140 in den Betriebszustand bewirken und im manuell bewirkten abgeklappten Zustand durch ein Arretierungselement 142 so fixiert werden, dass die Oberfläche der Verriegelungseinheit 131 geschlossen und somit überfahrbar ist. Im abgeklappten Zustand stützt sich die Riegelschiene 140 über eine Z-Nase 149, zwei Arretierungselemente 142 und zwei Achsbolzen mit Torsionsfeder 139 am Gehäuse 131.1 ab. Zum Aufstellen der Regelschienen 140 müssen gegen eine Federrückstellkraft beide Arretierungselemente 142 gleichzeitig geöffnet sein, was ein ungewolltes Aufstellen der Riegelschienen 140 sicher verhindert.

Die Riegelschienen 140 können bei jeder möglichen Stellung des Riegels 143 auf- und abgeklappt werden, ohne die Funktion des Gesamtsystems negativ zu beeinflussen. Über eine Riegellagerachse 144 wird der Riegel 143 beim Aufstellen und Abklappen der Riegelschiene 140 mitgeschwenkt und schließt im abgeklappten Zustand zusammen mit der Riegelschiene 140 immer den Frachtraumboden, gleichgültig ob in Verriegelungsstellung oder in Entriegelungsstellung oder auch in Zwischenpositionen.

Dies ist möglich, da sich die Mittellinie einer Riegelhubachse 145 und im abgeklappten Zustand der Riegelschiene 140 die Mittellinie der dann horizontalen Langlöcher 148 des Riegels 143 jederzeit auf gleicher Höhe wie die Mittellinien der Achsbolzen 141 befinden (vgl. Figuren 9.4 und 9.5).

Da sich eine Riegelhubachse 145 nur horizontal mit einer Spindelmutter 146, angetrieben durch eine horizontale Gewindespindel 147 bewegen kann, spielt im abgeklappten Zustand der Riegelschiene 140 die Stellung der Riegelhubachse 145 in den dann horizontalen Langlöchern 148 des Riegels 143 keine Rolle in Bezug auf die sich zwangsweise ergebende horizontale Stellung des Riegels 143.

Im abgeklappten Zustand stützt sich der Riegel 143 über seine Z-Nase 149 am Gehäuse 131.1 und über die Riegellagerachse 144 in der Riegelschiene 140 ab. Über das Langloch 148 fixiert der Riegel 143 mittels der Riegelhubachse 145 und der Spindelmutter 146 das freie Ende der Getriebespindel 147 in vertikaler Richtung.

Die Gewindespindel 147 wird über eine motorgetriebene Einheit 145 angetrieben (Figur 9.2). Von der Motorgetriebeeinheit 155 erstrecken sich parallel zum Längsträger 2 des Strukturrasters 1 Synchronisationswellen 143, die jeweils über Teleskopkupplungen 154 mit der Motor-/Getriebeeinheit 155 gekoppelt sind. In Bezug auf den Längsträger 2 des Strukturrasters 1 sind mehrere Motor-/Getriebeeinheiten 155 über die Synchronisationswellen 153 jeweils miteinander gekoppelt.

In der Darstellung gemäß Figur 9.3 befindet sich der Riegel 143 in seiner abgeklappten Position und bildet eine glatte, in Bezug auf den Frachtraumboden überfahrbare Fläche. In der Darstellung gemäß Figur 9.3 liegt die Riegelhubachse 145 in Bezug auf das Langloch 148 am oberen Anschlag des Langloches 148. Unterhalb des in seine horizontale, abgeklappte Stellung gefahrenen Riegels 143 befindet sich im Unterbaubereich der Drainagetrichter 99.

In der Darstellung gemäß Figur 9.4 ist der Riegel 143 teilweise aufgeklappt dargestellt, d.h. die Riegelnase 149 ist von ihrer Auflagefläche an der Unterseite des Gehäuses abgehoben. Das Gehäuse der Verriegelungseinheit 131 ist durch Bezugszeichen 131.1 identifiziert.

Der Darstellung gemäß Figur 9.5 ist entnehmbar, dass der Riegel 143 in seiner aufgerichteten Position mit seiner Z-Nase 149 einen Rand einer Palette 156 oder eines anderen Frachtgegenstandes übergreift. In der Darstellung gemäß Figur 9.5 steht der Riegel 143 aufrecht im Gehäuse 131.1 der Verriegelungseinheit 131. Die Systemhöhe ist in der Darstellung gemäß Figur 9.5 durch Bezugszeichen 5 angedeutet. In der Darstellung gemäß Figur 9.5 ist die Spindelmutter 146, angetrieben durch die Getriebespindel 147, fast vollständig in den Riegel 143 eingefahren. In vertikale Richtung fluchten die Riegelhubachse 145 und die Riegellagerachse 144 miteinander.

In der Darstellung gemäß Figur 9.6 ist gezeigt, wie die Z-Nase 149 den seitlichen Rand der Palette 156 freigibt, so dass diese im Flug parallel zu den Längsträgern 2 am Heck des Flugzeugs dieses bei geöffneter Ladeklappe verlassen. Mittels der Motor-/Getriebeeinheiten 155 werden die Verriegelungseinheiten 131 so angesteuert, dass die Riegel 143 die Ränder der Palette 156 oder eines anderen militärischen Ausrüstungsgegenstandes freigeben, so dass dessen Abwurf durch die geöffnete Ladeklappe ungehindert erfolgen kann.

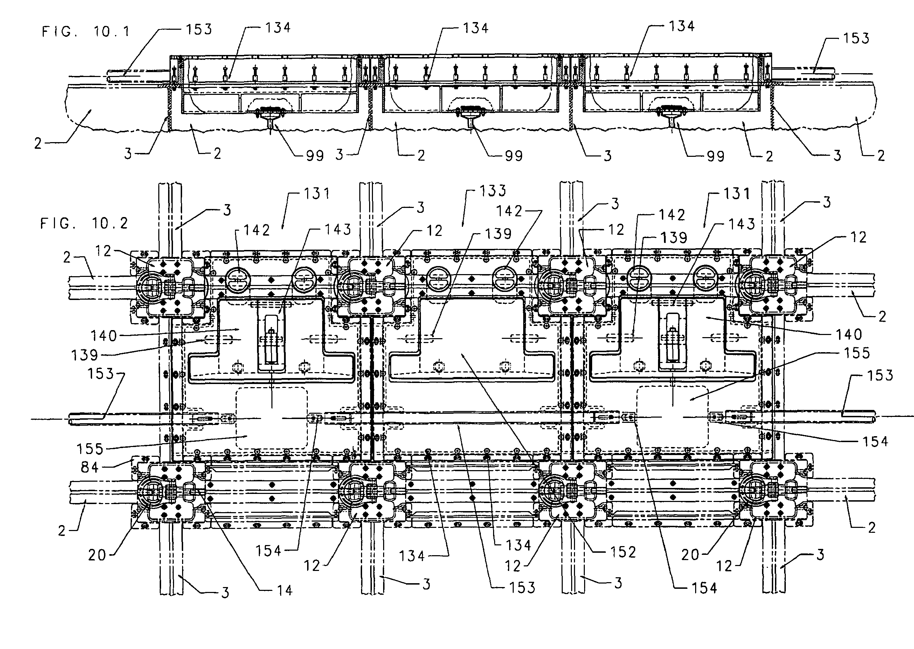

Den Darstellungen gemäß der Figuren 10.1 und 10.2 sind alternierend angeordnete, für militärische Zwecke nutzbare Verriegelungs- und Führungseinheiten in Vorderansicht und in der Draufsicht entnehmbar.

Über Achsbolzen mit Torsionsfedern 139, 141 kann eine Führungseinheit 133 um 90 ° gedreht werden. Die Torsionsfeder 139 an den Achsbolzen 141 bewirkt ein Aufstellen der Führungsschiene 152 in den Betriebszustand. Im manuell bewirkten, abgeklappten Zustand wird diese durch die Arretierungselemente 142 so fixiert, dass die Oberfläche der Führungseinheit 133 geschlossen und überfahrbar ist. Abgeklappt stützt sich die Führungsschiene 152 über ihre Z-Nase 149, die beiden Arretierungselemente 142 und die beiden Achsbolzen mit Torsionsfeder 139, 142 am Gehäuse 132 der Führungseinheit 133 ab. Zum Aufstellen der Führungsschiene 152 müssen entgegen einer Federrückstellkraft beide Arretierungselemente 142 gleichzeitig geöffnet sein, was ein ungewolltes Aufstellen der Führungsschiene 152 sicher verhindert. Über Führungsrollen 150 in der Riegelschiene 140 bzw. der Führungsschiene 152 wird die Reibung während des Beladens oder Entladens militärischer Paletten 156 oder Container oder anderen Ausrüstungsgegenständen während des Fluges oder bei Ladevorgängen in geometrisch günstiger Weise optimiert.

Die Synchronisationswellen 153 in den Führungseinheiten 133 verbinden über Teleskopkupplungen 154 die Motor-/Getriebeeinheiten 155 in den Verriegelungseinheiten 131 miteinander. Damit ist ein funktioneller Gleichlauf aller Riegel 143 im Frachtladesystem gewährleistet, da die durchgehenden Rotationskopplungen aller Verriegelungseinheiten 131 auf der linken bzw. der rechten Frachtraumseite mechanisch verbunden sind und zwangsweise synchron betätigt werden. Im Notfall ist die Betätigung auch über ein handbetätigbares System möglich.

Die Getriebespindel 147 am Ausgang der Motor-/Getriebeeinheit 155 treibt je nach Drehrichtung die Spindelmutter 146 vorwärts oder rückwärts, wobei sich die Spindelmutter 146 am Gehäuse 131.1 und am Riegel 143 gegen Verdrehen abstützt und über ihre Riegelhubachse 145 den über die Riegellagerachse 144 in der Riegelschiene 140 gelagerten Riegel 143 schwenkt. Je nach Endstellung der Riegel 143 sind die militärischen Paletten oder Container 156 entweder verriegelt oder entriegelt und damit in Flugrichtung, d.h. parallel zu den Längsträgern 2, fixiert oder freigegeben.

Die dezentrale Krafteinleitung über die Motor-/Getriebeeinheiten 155 bietet durch die Kopplung oder die Synchronisationswellen 143 eine hohe Ausfallsicherheit. Im Versagensfall eines oder mehrerer Motor-/Getriebeeinheiten 155 wird deren Antriebsfunktion von benachbarten Motor-/Getriebeeinheiten 155 mit übernommen.

Wird der Frachtraum hingegen nur zum Teil für den Transport von militärischen Paletten oder Containern 156 benötigt, können im restlichen Bereich des Frachtraumbodens die Militärgeräte 130 abgekappt bleiben, ohne die Funktion der aufgestellten Verriegelungseinheiten 131 bzw. Führungseinheiten 133 zu beeinflussen. Auch die Ausfallsicherheit, die Synchronisation und das mechanische Rückfallsystem bleiben in Funktion. Da die Riegelhubachse 145 in geschlossenen Verriegelungseinheiten 131 durch die Spindelmutter 146 in einer Langlochführung 148 des Riegels 143 bewegt wird, diese Langlochführung 148 durch die abgeklappte Riegelschiene 140 den dadurch mit abgeklappten Riegel 143 parallel zur Getriebespindel 147 liegt, wird die Bewegung der Riegelhubachse 145 zusammen mit der Riegeschiene 140 und dem abgeklappten Riegel 143 nicht behindert.

### Bezugszeichenliste

- 1: Strukturraster
- 2: Längsträger
- 3: Querträger
- 4: Oberkante Strukturraster
- 5: Systemhöhe
- 10: Zurrpunkt
- 12: Zurrpunktgehäuse
- 14: Zurrpunktachse
- 15: Achsenlager
- 16: Aufnahme
- 18: Steckverbinder
- 20: leichte Öse für niedrige Belastung
- 21: Ösenauge
- 22: schwere Öse für schwere Belastung
- 23: Aufnahme für schwere Öse
- 24: leichter Zusatzadapter
- 25: Bolzen
- 26: schwerer Zusatzadapter
- 28: Befestigungselemente zum Strukturraster 1
- 30: Befestigungselemente zu Fußbodenplatten 80
- 32: trittfester Füllkörper
- 40: Verbindungsplatte
- 50: Rollenbahngerät
- 51: Oberteil
- 52: Unterbaugehäuse
- 53: Auflagefläche
- 54: Befestigungselemente zum Strukturraster 1
- 55: Drainageöffnung
- 56: Befestigungselemente zur Fußbodenplatte 80
- 57: Sammelwanne
- 58: Rollenbahngerät-Bodenfläche
- 59: Dichtblech
- 60: Transportrollen mit Lagerung
- 61: Dichtleiste
- 62: fixe Befestigungsbolzen
- 63: bewegbare Befestigungsbolzen
- 64: Befestigungseinheit
- 65: Auslösegriff
- 66: Achse
- 67: Bolzen
- 68: Splint
- 69: Federn
- 70: Führungen
- 80: Fußbodenplatte
- 82: Sitzschienenkastenprofil
- 84: Auflageleiste/Dichtleiste
- 86: Einbauschrauben
- 88: Bodenblech
- 90: Deckblech
- 92: Stützprofil
- 94: Eckbeschläge
- 96: Unterbauwanne
- 98: Riegelträger
- 99: Drainagetrichter mit Filtereinsatz
- 100: Klappriegel
- 101: Riegelachse
- 102: Transportrollen mit Lagerung
- 104: fixe Befestigungsbolzen
- 106: Befestigungseinheit
- 108: Achse
- 110: Bolzen
- 112: Splint
- 114: Feder
- 116: Führung
- 118: Schiebebolzen
- 120: Auslösegriff

- 130: Militärgerät
- 131: Verriegelungseinheit
- 131.1: Gehäuseverriegelungseinheit
- 132: Gehäuse
- 133: Führungseinheit
- 134: Befestigungselemente
- 135: Befestigungselemente
- 136: erster Gehäusedeckel
- 137: Verbindungselemente
- 138: zweiter Gehäusedeckel
- 139: Torsionsfeder
- 140: Riegelschiene
- 141: Achsbolzen
- 142: Arretierungselemente
- 143: Riegel
- 144: Riegellagerachse
- 145: Riegelhubachse
- 146: Spindelmutter
- 147: Getriebespindel
- 148: Langloch
- 149: Z-Nase
- 150: Führungsrollen
- 152: Führungsschiene
- 153: Synchronisationswelle
- 154: Teleskopkupplung
- 155: Motor-/Getriebeeinheit
- 156: Palette, Frachtgegenstand

## Patentansprüche

1. Frachtraumboden für Luftfahrzeuge, der auf einem Strukturraster (1), Längsträger (2) und Querträger (3) umfassend, aufgenommen ist und in welchem auswechselbar angeordnete Fußbodenplatten (80), Rollenbahngeräte (50) sowie Zurrpunkte (10) zur Befestigung von Frachtgegenstände wie Paletten, Containern oder Fahrzeugen und Ausrüstungsgegenstände vorgesehen sind sowie Verriegelungseinheiten (98), die auf- bzw. abklappbare Riegelelemente (100, 143) umfassen, und Zurrpunkte (10) an Kreuzungspunkten der Längsträger (2) mit den Querträgern (3) auf dem Strukturraster (1) stationär aufgenommen sind, wobei, dass sowohl in den Frachtraumboden integrierte Rollenbahngeräte (50) als auch Verriegelungseinheiten (98, 131) in ihrer aufgerichteten Betriebsposition und in ihrer versenkten Überfahr- und Stauposition am immer gleich bleibenden Einbauort im Frachtraumboden aufnehmbar sind.

2. Frachtraumboden gemäß Anspruch 1, **dadurch gekennzeichnet, dass** die Rollenbahngeräte (50) und die Verriegelungseinheiten (98, 131) werkzeuglos von ihrer aufgerichteten Betriebsposition in ihre versenkte Überfahr- und Stauposition überführbar sind.

3. Frachtraumboden gemäß Anspruch 2, **dadurch gekennzeichnet, dass** Zurrpunktgehäuse (12) und Unterbaugehäuse (52) von Rollenbahngeräten (50), Auflageleisten (84) für Fußbodenplatten (80) und/oder Verriegelungseinheiten (98, 131) aufweisen, die mit einer Oberkante (4) des Strukturrasters (1) fluchten.

4. Frachtraumboden gemäß Anspruch 3, **dadurch gekennzeichnet, dass** in den Zurrpunktgehäusen (12) trittfeste elastische Füllkörper (32) enthalten sind.

5. Frachtraumboden gemäß Anspruch 2, **dadurch gekennzeichnet, dass** die Zurrpunktgehäuse (12) eine Zurrpunktachse (14) enthalten, auf der eine Aufnahme (16) die Befestigung von Ösen (20, 22) oder Zusatzadaptern (24, 26) mittels eines Steckverbinders (18) erlaubt.

6. Frachtraumboden gemäß Anspruch 5, **dadurch gekennzeichnet, dass** die Ösen (20, 22) in den Zurrpunktgehäusen (12) omnidirektional um zwei sich kreuzende, jeweils beidseitig gelagerte Achsen bewegbar sind.

7. Frachtraumboden gemäß Anspruch 3, **dadurch gekennzeichnet, dass** Fußbodenplatten (80) über Befestigungselemente (56, 86) auswechselbar auf Auflageleisten (84) der Zurrpunktgehäuse (12) sowie den Auflageleisten der Unterbaugehäuse (52) der Rollenbahngeräte (50), diese überlappend, befestigbar sind.

8. Frachtraumboden gemäß Anspruch 7, **dadurch gekennzeichnet, dass** in die Fußbodenplatten (80) Riegelträger (98) integriert sind.

9. Frachtraumboden gemäß einem oder mehrere der vorhergehenden Ansprüche, **dadurch gekennzeichnet, dass** die Rollenbahngeräte (50) Unterbaugehäuse (52) aufweisen, die über Befestigungselemente (54) mit dem Strukturraster (1) verbunden sind und die Unterbaugehäuse (52) Auflageflächen (53) enthalten, auf welchen Oberteile (51) des Rollenbahngerätes (50) im verstauten Zustand aufliegen.

10. Frachtraumboden gemäß einem oder mehrere der vorhergehenden Ansprüche, **dadurch gekennzeichnet, dass** die Riegelträger (98) Unterbauwannen (96) umfassen, in welche die Riegelträger (98) im verstauten Zustand aufnehmbar sind.

11. Frachtraumboden gemäß Anspruch 1, **dadurch gekennzeichnet, dass** die Rollenbahngeräte (50) und die Riegelträger (98) glatte Bodenflächen (58) aufweisen, die im verstauten Zustand der Rollenbahngeräte (50) und der Riegelträger (98) überfahrbar oder begehbar sind.

12. Frachtraumboden gemäß Anspruch 7, **dadurch gekennzeichnet, dass** die Fußbodenplatten (80) ein Sitzschienenkastenprofil (82) aufweisen, welches an seiner den Frachtraumboden begrenzenden Oberseite eine die Fußbodenplatte (80) umlaufendes Aufnahmeprofil zur Arretierung von Ausrüstungsgegenständen aufweist.

13. Frachtraumboden gemäß Anspruch 1, **dadurch gekennzeichnet, dass** mehrere Zurrpunkte (10) des Frachtraumbodens mit einer einen Kraftangriffspunkt aufweisenden Verbindungsplatte (40) überdeckbar sind, wobei die Verbindungsplatte (40) über schwere Zusatzadapter (26) mit diesen Zurrpunkten (10) verbunden ist.

14. Frachtraumboden gemäß Anspruch 1, **dadurch gekennzeichnet, dass** die Rollenbahngeräte (50) und/oder die Riegelträger (98) eine Befestigungseinheit (64, 106), aufweisen, deren Auslösegriff (65) sowohl von der Unterseite als auch von der Oberseite der Rollenbahngeräte (50) bzw. der Riegelträger (98) zugänglich ist.

15. Frachtraumboden gemäß einem oder mehrerer der vorhergehenden Ansprüche, **dadurch gekennzeichnet, dass** eine Systemhöhe (5) zwischen der Oberseite (90) der Fußbodenplatte (80) und Oberseiten der in aufgerichteter Betriebsposition befindlichen Rollenbahngeräte (50) ca. 30 mm beträgt.

16. Frachtraumboden gemäß Anspruch 3, **dadurch gekennzeichnet, dass** Unterbaugehäuse (52) von Rollenbahngeräten (50) Drainageöffnungen (55) aufweisen, die unterhalb der Oberkante (4) des Strukturrasters (1) angeordnet sind.

17. Frachtraumboden gemäß Anspruch 16, **dadurch gekennzeichnet, dass** unterhalb der Oberkante (4) des Strukturrasters (1) Drainagetrichter (99) angeordnet sind, welche einen auswechselbaren, nach Entfernen einer Fußbodenplatte (80) entnehmbaren Filtereinsatz aufweisen.

18. Frachtraumboden gemäß Anspruch 16, **dadurch gekennzeichnet, dass** Sammelwannen (57) für Drainageflüssigkeit unterhalb der Oberkante (4) des Strukturrasters (1) angeordnet sind, die einen sich von den Drainageöffnungen (55) zum Drainagetrichter (99) geneigt verlaufenden Wannenboden aufweisen.

19. Frachtraumboden gemäß Anspruch 1, **dadurch gekennzeichnet, dass** parallel zu den Längsträgern (2) des Strukturrasters (1) für militärische Zwecke nutzbare Verriegelungseinheiten (131) und Führungseinheiten (133) angeordnet sind, wobei den für militärische Zwecke nutzbaren Verriegelungseinheiten (131) eine den Riegel (143) betätigende Motor-/Getriebeeinheit (155) zugeordnet ist.

20. Frachtraumboden gemäß Anspruch 19, **dadurch gekennzeichnet, dass** die Riegel (143) der für militärische Zwecke nutzbaren Verriegelungseinheiten (131) eine Langlochführung (148) aufweisen, welche von einer Riegelhubachse (145) durchsetzt ist, um welche der Riegel (143) mittels einer Getriebespindel (147) betätigbar ist.

21. Frachtraumboden gemäß Anspruch 19, **dadurch gekennzeichnet, dass** die in alternierender Abfolge parallel zu den Längsträgern (2) des Strukturrasters (1) aufgenommenen die Riegel (143) betätigenden Motor-/Getriebeeinheiten (155) über Synchronisationswellen (153) miteinander gekoppelt sind.

22. Frachtraumboden gemäß Anspruch 21, **dadurch gekennzeichnet, dass** die Synchronisationswellen (153) zu weiteren Motor-/Getriebeeinheiten (155) jeweils über Teleskopkupplungen (154) mit benachbarten Motor-/Getriebeeinheiten (155) gekoppelt sind.

## Claims

1. Cargo-hold floor for aircraft, which is received on a grid structure (1) comprising longitudinal members (2) and crossmembers (3) and in which are provided exchangably arranged floor plates (80), roller conveyor apparatuses (50) and also lashing points (10) for the fastening of cargo articles, such as pallets, containers or vehicles and articles of equipment, and locking units (98) which comprise lock elements (100, 143) capable of being folded open and of being folded away, and lashing points (10) being received in a stationary manner on the grid structure (1) at intersection points of the longitudinal members (2) with the crossmembers (3), wherein both roller conveyor apparatuses (50) integrated into the cargo-hold floor and locking units (98, 131) can be received in their erected operating position and in their countersunk drive-over and stowage position at the installation location which always remains the same in the cargo-hold floor.

2. Cargo-hold floor according to Claim 1, **characterized in that** the roller conveyor apparatuses (50) and the locking units (98, 131) can be transferred, without a tool, from their erected operating position into their countersunk drive-over and stowage position.

3. Cargo-hold floor according to Claim 2, **characterized in that** lashing point housings (12) and foundation housings (52) of roller conveyor apparatuses (50) have bearing strips (84) for floor plates (80) and/or locking units (98, 131), said bearing strips being in alignment with a top edge (4) of the grid structure (1).

4. Cargo-hold floor according to Claim 3, **characterized in that** tread-proof elastic filling bodies (32) are contained in the lashing point housings (12).

5. Cargo-hold floor according to Claim 2, **characterized in that** the lashing point housings (12) contain a lashing point shaft (14), on which a receptacle (16) allows the fastening of lugs (20, 22) or additional adaptors (24, 26) by means of a plug connector (18).

6. Cargo-hold floor according to Claim 5, **characterized in that** the lugs (20, 22) in the lashing point housings (12) can be moved omnidirectionally about two intersecting axes mounted in each case on both sides.

7. Cargo-hold floor according to Claim 3, **characterized in that** floor plates (80) can be fastened exchangably via fastening elements (56, 86) to bearing strips (84) of the lashing point housings (12) and to the bearing strips of the foundation housings (52) of the roller conveyor apparatuses (50) so as to overlap these bearing strips.

8. Cargo-hold floor according to Claim 7, **characterized in that** lock carriers (98) are integrated into the floor plates (80).

9. Cargo-hold floor according to one or more of the preceding claims, **characterized in that** the roller conveyor apparatuses (50) have foundation housings (52) which are connected to the grid structure (1) via fastening elements (54), and the foundation housings (52) contain bearing surfaces (53), on which upper parts (51) of the roller conveyor apparatus (50) lie in the stowed state.

10. Cargo-hold floor according to one or more of the preceding claims, **characterized in that** the lock carriers (98) comprise foundation pits (96), into which the lock carriers (98) can be received in the stowed state.

11. Cargo-hold floor according to Claim 1, **characterized in that** the roller conveyor apparatuses (50) and the lock carriers (98) have smooth bottom surfaces (58) which can be driven over or walked on in the stowed state of the roller conveyor apparatuses (50) and of the lock carriers (98).

12. Cargo-hold floor according to Claim 7, **characterized in that** the floor plates (80) have a seat-rail box profile (82) which, on its top side delimiting the cargo-hold floor, has a reception profile, running peripherally around the floor plate (80), for the detention of articles of equipment.

13. Cargo-hold floor according to Claim 1, **characterized in that** a plurality of lashing points (10) of the cargo-hold floor can be covered with a connecting plate (40) having a force engagement point, the connecting plate (40) being connected to these lashing points (10) via heavy additional adaptors (26).

14. Cargo-hold floor according to Claim 1, **characterized in that** the roller conveyor apparatuses (50) and/or the lock carriers (98) have a fastening unit (64, 106), the release grip (65) of which is accessible both from the underside and from the top side of the roller conveyor apparatuses (50) or of the lock carriers (98).

15. Cargo-hold floor according to one or more of the preceding claims, **characterized in that** a system height (5) between the top side (90) of the floor plate (80) and top sides of the roller conveyor apparatuses (50) located in the erected operating position amounts to approximately 30 mm.

16. Cargo-hold floor according to Claim 3, **characterized in that** foundation housings (52) of roller conveyor apparatuses (50) have drainage orifices (55) which are arranged below the top edge (4) of the grid structure (1).

17. Cargo-hold floor according to Claim 16, **characterized in that,** below the top edge (4) of the grid structure (1), drainage funnels (99) are arranged, which have an exchangeable filter insert, extractable after the removal of a floor plate (80).

18. Cargo-hold floor according to Claim 16, **characterized in that** collecting troughs (57) for drainage fluid are arranged below the top edge (4) of the grid structure (1) and have a trough bottom running at an inclination from the drainage orifices (55) to the drainage funnel (99).

19. Cargo-hold floor according to Claim 1, **characterized in that** locking units (131) and guide units (133) which can be used for military purposes are arranged parallel to the longitudinal members (2) of the grid structure (1), the locking units (131) which can be used for military purposes being assigned a motor/gear unit (155) actuating the lock (143).

20. Cargo-hold floor according to Claim 19, **characterized in that** the locks (143) of the locking units (131) which can be used for military purposes have a long-hole guide (148) through which passes a lock-stroke shaft (145) about which the lock (143) can be actuated by means of a gear spindle (147).

21. Cargo-hold floor according to Claim 19, **characterized in that** the motor/gear units (155) received in alternating sequence parallel to the longitudinal members (2) of the grid structure (1) and actuating the locks (143) are coupled to one another via synchronization shafts (153).

22. Cargo-hold floor according to Claim 21, **characterized in that** the synchronization shafts (153) for further motor/gear units (155) are coupled to adjacent motor/gear units (155) in each case via telescope couplings (154).

## Revendications

1. Plancher de soute d'avions qui est logé sur une grille structurelle (1), comportant des longerons (2) et des traverses (3), et dans lequel sont prévus des panneaux de plancher (80) disposés de manière interchangeable, des appareils de transporteur à rouleaux (50) ainsi que des points d'arrimage (10) destinés à fixer des pièces de fret comme des palettes, des containers ou des véhicules et des pièces d'équipement ainsi que des unités de verrouillage (98), qui comportent des éléments formant verrou (100, 143) dépliables et/ou repliables, et les points d'arrimage (10) sur les points de croisement des longerons (2) avec les traverses (3) sont logés de manière stationnaire sur la grille structurelle (1), les appareils de transporteur à rouleaux (50) intégrés dans le plancher de la soute de même que les unités de verrouillage (98, 131) dans leur position de fonctionnement redressée et dans leur position encastrée escamotée et de rangement pouvant être logés dans le plancher de soute sur le même lieu de montage.

2. Plancher de soute selon la revendication 1, **caractérisé en ce que** les appareils de transporteur à rouleaux (50) et les unités de verrouillage (98, 131) peuvent passer, sans l'aide d'outil, de leur position de fonctionnement redressée à leur position encastrée escamotée et de rangement.

3. Plancher de soute selon la revendication 2, **caractérisé en ce que** les boîtiers de point d'arrimage (12) et les boîtiers de base (52) des appareils de transporteur à rouleaux (50) comprennent des baguettes d'appui (84) pour les panneaux de plancher (80) et/ou les unités de verrouillage (98, 131) qui s'alignent sur une arête supérieure (4) de la grille structurelle (1).

4. Plancher de soute selon la revendication 3, **caractérisé en ce que** des corps de remplissage (32) élastiques antidérapants sont contenus dans les boîtiers de point d'arrimage (12).

5. Plancher de soute selon la revendication 2, **caractérisé en ce que** les boîtiers de point d'arrimage (12) contiennent un axe de point d'arrimage (14) sur lequel une réception (16) permet la fixation d'oeillets (20, 22) ou d'adaptateurs additionnels (24, 26) au moyen d'un connecteur enfichable (18).

6. Plancher de soute selon la revendication 5, **caractérisé en ce que** les oeillets (20, 22) peuvent être déplacés dans les boîtiers de point d'arrimage (12) de manière omnidirectionnelle autour de deux axes se croisant, respectivement logés sur les deux côtés.

7. Plancher de soute selon la revendication 3, **caractérisé en ce que** les panneaux de plancher (80) peuvent être fixés par des éléments de fixation (56, 86) de manière interchangeable sur des baguettes d'appui (84) des boîtiers de point d'attache (12) ainsi que des baguettes d'appui des boîtiers de base (52) des appareils de transporteur à rouleaux (50), en les chevauchant.

8. Plancher de soute selon la revendication 7, **caractérisé en ce que** des supports de verrou (98) sont intégrés dans les panneaux de plancher.

9. Plancher de soute selon l'une quelconque ou plusieurs des revendications précédentes, **caractérisé en ce que** les appareils de transporteur à rouleaux (50) comprennent des boîtiers de base (52) qui sont reliés par des éléments de fixation (54) à la grille structurelle (1) et les boîtiers de base (52) contiennent des surfaces d'appui (53) sur lesquelles reposent les parties supérieures (51) de l'appareil de transporteur à rouleaux (50) dans l'état arrimé.

10. Plancher de soute selon l'une quelconque ou plusieurs des revendications précédentes, **caractérisé en ce que** les supports de verrou (98) comportent des cuves de base (96) dans lesquelles les supports de verrou (98) peuvent être logés à l'état arrimé.

11. Plancher de soute selon la revendication 1, **caractérisé en ce que** les appareils de transporteur à rouleau (50) et les supports de verrou (98) comprennent des surfaces de fond (58) lisses qui sont escamotables ou accessibles dans l'état arrimé des appareils de transporteur à rouleaux (50) et des supports de verrou (98).

12. Plancher de soute selon la revendication 7, **caractérisé en ce que** les panneaux de plancher (80) comprennent un profil de caisse à rainure (82), lequel comprend, sur sa face supérieure limitant le plancher de soute, un profil de réception entourant le panneau de plancher (80), destiné à bloquer des pièces d'équipement.

13. Plancher de soute selon la revendication 1, **caractérisé en ce que** plusieurs points d'arrimage (10) du plancher de soute peuvent être recouverts par une plaque de jonction (40) comprenant un point d'application de force, la plaque de jonction (40) étant reliée par de lourds adaptateurs additionnels (26) à ces points d'arrimage (10).

14. Plancher de soute selon la revendication 1, **caractérisé en ce que** les appareils de transporteur à rouleau (50) et/ou les supports de verrou (98) comprennent une unité de fixation (64, 106) dont la poignée de déclenchement (65) est accessible aussi bien par la face inférieure que par la face supérieure des appareils de transporteur à rouleaux (50) et/ou des supports de verrou (98).

15. Plancher de soute selon l'une quelconque ou plusieurs des revendications précédentes, **caractérisé en ce qu'**une hauteur de système (5), entre la face supérieure (90) du panneau de plancher (80) et les faces supérieures des appareils de transporteur à rouleau (50) situés dans la position de fonctionnement redressée, mesure environ 30 mm.

16. Plancher de soute selon la revendication 3, **caractérisé en ce que** les boîtiers de base (52) des appareils de transporteur à rouleaux (50) comprennent des ouvertures de drainage (55) qui sont disposées au-dessous de l'arête supérieure (4) de la grille structurelle (1).

17. Plancher de soute selon la revendication 16, **caractérisé en ce que** des entonnoirs de drainage (99), lesquels comprennent une cartouche filtrante interchangeable, pouvant être enlevée après avoir retiré un panneau de plancher (80), sont disposés au-dessous de l'arête supérieure (4) de la grille structurelle (1).

18. Plancher de soute selon la revendication 16, **caractérisé en ce que** des cuves de collecte (57) pour le liquide de drainage sont disposées au-dessous de l'arête supérieure (4) de la grille structurelle (1), lesquelles comprennent des fonds de cuve s'étendant de manière inclinée des ouvertures de drainage (55) aux entonnoirs de drainage (99).

19. Plancher de soute selon la revendication 1, **caractérisé en ce que** des unités de verrouillage (131) et des unités de guidage (133) à usage militaire sont disposées parallèlement aux longerons (2) de la grille structurelle (1), un groupe moto-réducteur (155) actionnant le verrou (143) étant associé aux unités de verrouillage (131) à usage militaire.

20. Plancher de soute selon la revendication 19, **caractérisé en ce que** les verrous (143) des unités de verrouillage (131) à usage militaire comprennent un guidage par perçage ovale (148), lequel est traversé par un essieu relevable de verrou (145) autour duquel le verrou (143) peut être actionné au moyen d'une broche de transmission (147).

21. Plancher de soute selon la revendication 19, **caractérisé en ce que** les groupes moto-réducteurs (155) actionnant les verrous (143) logés dans une succession alternée parallèlement aux longerons (2) de la grille structurelle (1) sont couplés les uns aux autres par des arbres de synchronisation (153).

22. Plancher de soute selon la revendication 21, **caractérisé en ce que** les arbres de synchronisation (153) sont couplés à d'autres groupes moto-réducteurs (155) respectivement par des accouplements télescopiques (154) aux groupes moto-réducteurs (155) voisins.
